# EUROPEAN PATENT SPECIFICATION

(11) **EP 3 414 719 B1**
(45) Date of publication and mention of the grant of the patent: **24.12.2025**
(21) Application number: 17731441.6
(22) Date of filing: 09.06.2017
(51) Int. Cl.: G06Q 20/32, H04W 4/02

(54) **IDENTIFYING USER COMPUTING DEVICE SPECIFIC LOCATIONS**
IDENTIFIZIERUNG EINES SPEZIFISCHEN STANDORTS EINER BENUTZERDATENVERARBEITUNGSVORRICHTUNG
IDENTIFICATION D'EMPLACEMENTS SPÉCIFIQUES À UN DISPOSITIF INFORMATIQUE D'UTILISATEUR

(30) Priority: 19.06.2016 US 201662352004 P; 07.06.2017 US 201715616895
(43) Date of publication of application: 19.12.2018
(73) Proprietor: Google LLC, Mountain View, CA 94043 (US)
(72) Inventor: CHANDRASEKARAN, Sashikanth, Mountain View, CA 94043 (US); XU, Zhihong, Mountain View, CA 94043 (US)
(74) Representative: Marks & Clerk GST
(86) International application number: PCT/US2017/036883
(87) International publication number: WO 2017/222837

(56) References cited:
- WO-A1-2016/033468
- US-A1- 2012 115 512
- US-A1- 2015 181 384
- US-A1- 2015 319 573
- US-A1- 2015 379 650

## Description

### CROSS REFERENCE TO RELATED APPLICATIONS

This application claims priority to U.S. Patent Application No. 15/616,895 filed June 7, 2017, and entitled "Identifying User Computing Device Specific Locations," which claims priority to U.S. Provisional Patent Application No. 62/352,004 filed June 19, 2016, and entitled "Identifying User Computing Device Specific Locations."

### TECHNICAL FIELD

The present disclosure relates to identifying user computing device locations at specific points, e.g. in a drive-through location, based on location data of the user computing device and a (beacon) signal strength of a beacon device.

### BACKGROUND

When consumers make purchases at a merchant location, many methods of conducting a transaction are available. Consumers may use many different cards or accounts for purchases, such as gift cards, debit cards, credit cards, stored value cards, and other cards or accounts. The user account identifiers and other data represented by the cards may be communicated to the merchant system via magnetic stripes of the cards, near field communication technologies involving user computing devices, and other suitable mechanisms.

Current applications for conducting transactions at a merchant location require a consumer to perform actions to identify himself by providing user account identifiers or other data to the merchant system.

US 2015/379650 A1 describes systems and methods for communication of orders and payments in a drive through using wireless beacons. A merchant location may include a drive through with a wireless beacon established in the drive through. The beacon may provide communication services with a device for the user. The merchant may detect that the user is in a vehicle in the drive through using either the connection between the device of the user and the beacon or a camera, sensor, or other detector located near the beacon in the drive through. Based on check-in information generated on the connection, an order for the user may be accessed. The user may pay for the order using the device and through the connection to the beacon. Further, if other devices for additional users in the vehicle connect to the beacon, the additional users may split the payment for the order.

US 2015/181384 describes a beaconing protocol that can be used to broadcast beacon information to mobile devices. The beaconing protocol can be used by a Bluetooth Low Energy (LE) (e.g., Bluetooth 4.0) beacon to transmit a package of information that identifies the beacon and indicates the calibrated transmission power (e.g., measured power) of the beacon. The package of information can be configured by beacon providers and/or beacon installers at the locations where the beacons are installed. When a mobile device receives the beacon package, the mobile device can use the beacon identification information and/or the measured power of the beacon to determine a location (e.g., precise location, geofence location) of the mobile device. In some implementations, the mobile device can transmit the beacon information to a server and the server can determine the location of the mobile device and send location and/or content information back to the mobile device.

WO 2016/033468 describes a process including: determining that a mobile computing device has crossed a geofence associated with a merchant store; sending, to a remote classifier server, a request for object-recognition classifiers for objects in the merchant store; receiving a set of object- recognition classifiers; receiving with the mobile computing device from user a request to search for offers; capturing an image with a camera of the mobile computing device; receiving one or more wireless beacon identifiers with the mobile computing device; based on the wireless beacon identifiers, selecting a subset of the object-recognition classifiers in the set of object-recognition classifiers; and recognizing an object in the captured image based on the selected subset of the object-recognition classifiers; and requesting, from a remote offer publisher server, offers corresponding to the recognized object; and receiving offers from the remote offer publisher server; and displaying the received offers to the user.

US 2012/115512 describes a mobile device that can monitor a current location using a multi-tier approach. A baseband subsystem that can monitor a coarse location of the mobile device using various course location parameters, such as a mobile country code (MCC), a location area code (LAC), or a cell identifier (cell ID), as the mobile device moves closer to the geographic region. Upon determining that the mobile device is in a cell that intersects the geographic region, the baseband subsystem can transfer the monitoring to the application subsystem. The task can be performed when the application subsystem determines that the mobile device is currently located in the geographic region. A beacon network can provide more accurate estimates of mobile device location and advertise location based services available to the mobile device.

US 2015/319573 describes a location monitoring feature in a mobile device that triggers specific app subsystems based on the device's geographic position-for example, automatically enabling or disabling functions when entering or leaving defined geofenced locations.

### SUMMARY

The invention is defined by the independent claims.

### BRIEF DESCRIPTION OF THE DRAWINGS

Figure 1 is a block diagram depicting a system for identifying users at a drive-through location based on location data of a user computing device and signal strength indicator data from a beacon device, in accordance with certain examples.
Figure 2 is a block flow diagram depicting a method for identifying users at a drive-through location based on location data of a user computing device and signal strength indicator data from a beacon device, in accordance with certain examples.
Figure 3 is a block flow diagram depicting a method for registering, by a merchant system, with a processing system and installing hardware at a drive-through system location, in accordance with certain examples.
Figure 4 is a block flow diagram depicting a method for registering, by a user, with a processing system, in accordance with certain examples.
Figure 5 is a block flow diagram depicting a method for check-ing in, by a user computing device, at a drive-through location, in accordance with certain examples.
Figure 6 is a block flow diagram depicting a method for notifying, by a user computing device, a point of sale device that the user computing device is next in line at a drive-through location, in accordance with certain examples.
Figure 7 is a block flow diagram depicting a method for initiating, by a user, a transaction at a point of sale device, in accordance with certain examples.
Figure 8 is a block flow diagram depicting a method for receiving, by a processing system, a selection of account information from a point of sale device and processing a transaction, in accordance with certain examples.
Figure 9 is a block diagram depicting a computing machine and module, in accordance with certain examples.

### DETAILED DESCRIPTION OF EXAMPLES

### Overview

The examples described herein provide computer-implemented techniques for identifying user computing device locations at specific points at a drive-through location based on location data of the user computing device and signal strength indicator data from a beacon device at the drive-through location.

In an example, a merchant registers with a payment processing system. A merchant system installs a merchant beacon device and a merchant point of sale device at a merchant system location. In an example, a user establishes an account with the payment processing system and downloads a payment application on a user computing device associated with the user. In an example, the user enters payment account information to associate with the user account via the payment application on the user computing device. A user computing device of the user determines a location of the user computing device and scans for signals over a Bluetooth low energy ("BLE") network. The user computing device enters an active state upon determining that the user computing device has entered a geofence associated with the merchant point of sale device or upon identifying a merchant beacon device identifier broadcast by merchant beacon device. The user computing device monitors a signal strength of the merchant beacon device and monitors the user computing device location. If the user computing device is less than a first threshold distance from the merchant beacon device and the merchant beacon device signal strength is greater than a first threshold signal strength, the user computing device checks in to the merchant point of sale device and transmits a user account identifier to the merchant point of sale device. In another example, the user computing device checks in to the payment processing system and transmits a user account identifier to the payment processing system over the network. In this example, the merchant point of sale device receives the user account identifier over the network. The user computing device continues to monitor the location of the user computing device and the signal strength of the merchant beacon device to determine whether the user computing device remains within the geofence boundary and to determine when the user computing device arrives at a next in line point. The user computing device determines that the user computing device has arrived at the next in line point and sends a next in line signal to the merchant point of sale device over the BLE network in response to determining that the user computing device is less than a second threshold distance from the merchant beacon device and in response to determining that the merchant beacon device signal strength is greater than a second threshold signal strength. In an example, the second threshold distance is less than the first threshold distance and the second threshold signal strength is greater than the first threshold signal strength. The user computing device transmits a next in line signal and a user account identifier to the merchant point of sale device. The merchant point of sale operator confirms the user identity, assists the user in selecting payment data, and confirms the transaction details via the merchant point of sale device. The merchant point of sale device transmits a user account identifier, user selected payment account information for use in the transaction, and transaction details to the payment processing system, which processes a payment transaction based on the received information.

In an example, a merchant system registers with a payment processing system. A merchant system operator installs a payment application on a merchant point of sale device. In another example, the merchant system operator installs the payment application on a plurality of merchant point of sale devices at a merchant system location. A merchant beacon device receives a beacon identifier from a payment processing system. For example, the merchant system operator installs one or more merchant beacon devices at the merchant system location. The merchant beacon device broadcasts the merchant beacon identifier via wireless communication at the merchant system location. The merchant system operator installs a merchant point of sale device at the merchant system location to correspond to the merchant beacon device identifier. In another example, a plurality of merchant point of sale devices are installed at the merchant system location, each merchant point of sale device corresponding to a particular merchant beacon device identifier. In yet another example, a particular merchant beacon device identifier may correspond to two or more particular merchant point of sale devices. In another example, the merchant point of sale device, instead of a merchant beacon device, broadcasts the merchant beacon identifier. The payment processing system receives a merchant point of sale device identifier and associates it with a corresponding beacon identifier broadcasted by the merchant beacon device or merchant point of sale device.

In an example, the user registers with a payment processing system. For example, the user accesses a payment processing system website via a user computing device associated with the user. The user registers with the payment processing system and downloads a payment application onto the user computing device. The user enters payment account information into the user account using the payment application. For example, payment account information comprises information associated with one or more credit accounts, bank accounts, merchant store accounts, or other payment accounts of the user. In an example, payment account information comprises information necessary to process a transaction with the payment account such as an account number, an account holder name, an expiration date, and other relevant information. The user configures permissions and settings associated with the user account using the payment application. For example, the user may associate a particular payment account for use in transactions. In this example, the user does not have to select payment account information at the point of sale device during any transaction and instead the associated particular payment account is used in all transactions initiated by the user at merchant locations.

The user signs in to a payment application on the user computing device. The user carries the user computing device within a geofence boundary associated with a merchant point of sale device. The user computing device determines a location of the user computing device and scans for signals over a BLE network via an antenna of the user computing device. The user computing device transitions from an inactive state to an active state upon determining that the user computing device has entered the geofence boundary associated with the merchant point of sale device or upon identifying a merchant beacon device identifier broadcast by the merchant beacon device. In another example, the user computing device transitions from an inactive state to a semi-active state upon determining that the user computing device has entered the geofence boundary. A semi-active state of the user computing device comprises a state in which the user computing device scans for wireless signals over a BLE, Wi-Fi, or NFC network at a regular interval. An active state of the user computing device comprises a state in which the user computing device scans for wireless signals over the BLE, Wi-Fi, or NFC network at intervals of less duration than when in the semi-active state. An inactive state of the user computing device comprises a state in which the user computing device scans for wireless signals over the BLE, Wi-Fi, or NFC network at intervals of less duration than when in both the active and semi-active states.

In an example, the merchant beacon device identifier is received via the BLE scan of the user computing device. The user computing device monitors a signal strength of the merchant beacon device and monitors the user computing device location. When the user computing device determines, based on the logged location data and the logged signal strength data, that the user computing device is less than a first threshold distance from the merchant beacon device and that the signal strength of the merchant beacon device 120 is greater than a minimum threshold signal strength, the user computing device sends a check-in signal comprising a user account identifier to the merchant point of sale device.

The user approaches a merchant point of sale device. The merchant point of sale device operator totals items of the user for purchase. The merchant point of sale device operator asks the user to select a payment option. The user directs the merchant point of sale device operator to initiate a transaction via the payment application. For example, as previously discussed, the payment application is installed on both the merchant point of sale device and the user computing device. The merchant point of sale device operator selects an option on the merchant point of sale device to initiate a transaction using the payment application.

In an example, the first threshold distance of the user computing device to the merchant beacon device and/or the first threshold signal strength of the merchant beacon device as detected by the user computing device correspond to a 'check-in point' at which the user computing device sends a check-in signal. Also, a second threshold distance and/or second threshold signal strength correspond to a location at which the user computing device deems the user computing device to be next in line for payment at the drive-through window at the merchant location. In an example, the first threshold distance is greater than the second threshold distance and the first threshold signal strength is less than the second threshold signal strength. Further, in an example, the geofence boundary associated with the merchant location is equal to or farther away than the first threshold distance form the merchant beacon device. In an example, the first signal strength threshold correlates to the check-in point at which the user computing device sends the check-in signal and the second signal strength threshold correlates to the location at which the user computing device deems the user computing device to be next in line for payment at the drive-through window at the merchant location.

In an example, depending on the movement, driving, or other behavior of the user, the user computing device may change position to be within or outside of the geofence boundary, between the geofence boundary and the check-in point, between the check-in point and the next in line point, or within the next in line point. Using the signal strength indicator detected from the merchant beacon device and the location data logged by the user computing device, the user computing device may determine between which boundaries and/or distance thresholds the user computing device is located to take appropriate action. As previously discussed, if the user computing device detects, based on the location data and detecting a merchant beacon device identifier, that it has entered the geofence boundary, the user computing device transitions from the inactive state to the active state. Further, if the user computing device detects that the user computing device is between the check-in point and the next in line point, based on determining that the signal strength is greater than the first threshold signal strength and the distance from the merchant beacon device is less than the first threshold distance, the user computing device sends a check-in signal to the merchant POS device at the merchant drive-through window over the BLE network. In another example, the user computing device sends the check-in signal to the payment processing system via the network, the payment processing system transmits the check-in signal to the merchant POS device via the network, and the merchant POS device receives the check-in signal via the network. An example check-in signal comprises a user device identifier. In another example, the merchant location does not comprise the check-in point, only the next in line point, and the user computing device does not determine that the signal strength is greater than the first threshold signal strength and that the distance from the merchant beacon device is less than the first threshold distance or transmit a check-in signal. In an example, if the user computing device detects that the user computing device is within the next in line point, based on determining that the signal strength is greater than the second threshold signal strength and the distance from the merchant beacon device is less than the second threshold distance, the user computing device transmits a next in line signal to the merchant POS device via the BLE network. In another example, the user computing device transmits the next in line signal to the payment processing system over the network, the payment processing system transmits the next in line signal via the network to the merchant POS device, and the merchant POS device receives the next in line signal via the network. An example next in line signal comprises a user account identifier.

The user arrives at the drive-through window comprising the merchant POS device and the merchant POS device operator totals the items of the user for purchase. The merchant POS device operator asks the user to select a payment option and the user directs the merchant POS device operator to initiate a transaction via the payment application. The merchant POS device operator selects an option on the merchant POS device to initiate the transaction using the payment application. In response to receiving the input of the selection of the option to initiate the transaction using the payment application, the merchant POS device displays a user account identity associated with the user computing device that originated the next in line status message. The merchant POS device operator confirms the user identity and selects an option to conduct a transaction with the user account and the merchant POS device transmits the user account identifier and a payment account information request to the payment processing system. In an example, confirming the user identity may comprise the merchant POS device operator requesting an identity document of the user and comparing data on the identity document with user account data displayed on the merchant POS device.

In an example, the payment processing system receives an indication of the identity of the user from the merchant POS device and the payment account information request. For example, the merchant POS device transmits the indication of the identity of the user to the payment processing system via the network and the payment processing system receives the indication of the identity of the user via the network. The payment processing system transmits account information corresponding to the identified user to the merchant point of sale device. For example, after receiving the identity of the user from the merchant POS device, the payment processing system transmits payment account information associated with one or more accounts of the identified user. The merchant point of sale device displays part or all of the information associated with the one or more accounts of the identified user. The merchant point of sale device operator, upon direction of the user, selects a particular user account for transaction and confirms the transaction with permission of the user. The merchant point of sale device transmits transaction details to the payment processing system over the network. For example, transaction details may comprise a total amount of the transaction, a selected user account for use in the transaction, an account of the merchant for use in the transaction, and other useful or relevant information. For example, the payment processing system receives the transaction details over the network from the merchant POS device. The payment processing system transmits a transaction authorization request to an issuer system over the network. For example, the issuer system receives the transaction authorization request from the payment processing system over the network. In an example, the issuer system is associated with the user payment account selected for use in the transaction. The issuer system approves the transaction authorization request and transmits a transaction authorization approval to the payment processing system over the network. The payment processing system receives the transaction authorization approval over the network and transmits a transaction receipt to the merchant point of sale device over the network.

By using and relying on the methods and systems described herein, the payment processing system, the merchant beacon device, the user computing device, and the merchant point of sale device enable the user to conduct a transaction without the user having to interact with the user computing device at the merchant point of sale device, as required in some current technology. As such, the systems and methods described herein may reduce the inputs required by the user via the user computing device and the inputs required by the merchant point of sale device operator to identify the user.

### Example System Architecture

Turning now to the drawings, in which like numerals indicate like (but not necessarily identical) elements throughout the figures, examples are described in detail.

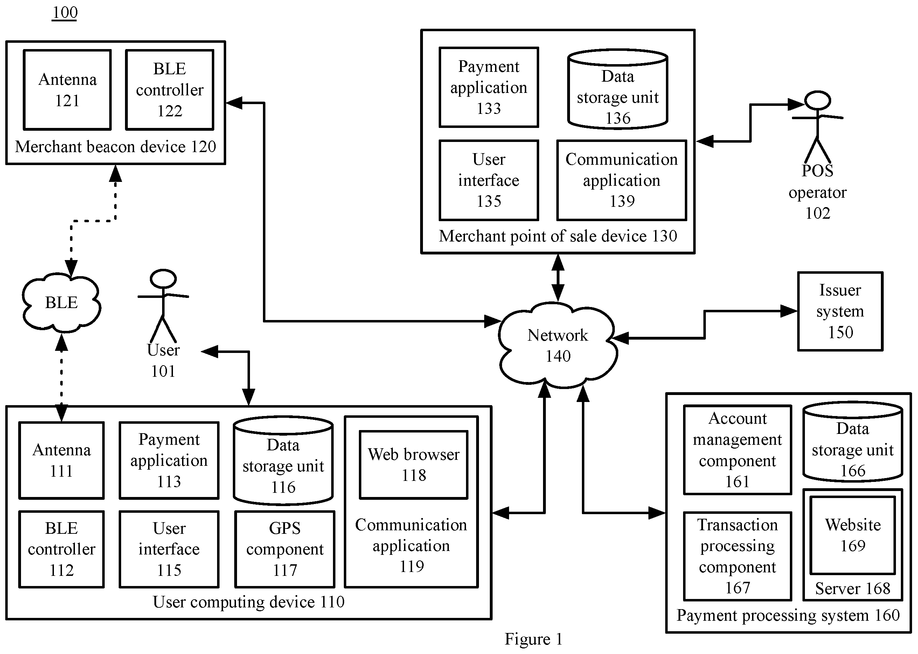

Figure 1 is a block diagram depicting a system 100 for conducting a transaction with facial recognition of a user 101, in accordance with certain examples. As depicted in Figure 1, the system 100 includes network computing devices 110, 120, 130, 150, and 160 that are configured to communicate with one another via one or more networks 140. In some embodiments, a user associated with a device must install an application and/or make a feature selection to obtain the benefits of the techniques described herein.

In examples, the network 140 can include a local area network ("LAN"), a wide area network ("WAN"), an intranet, an Internet, storage area network ("SAN"), personal area network ("PAN"), a metropolitan area network ("MAN"), a wireless local area network ("WLAN"), a virtual private network ("VPN"), a cellular or other mobile communication network, Bluetooth, Bluetooth low energy ("BLE"), near field communication ("NFC"), or any combination thereof or any other appropriate architecture or system that facilitates the communication of signals, data, and/or messages. Throughout the discussion of examples, it should be understood that the terms "data" and "information" are used interchangeably herein to refer to text, images, audio, video, or any other form of information that can exist in a computer-based environment.

Each network computing device 110, 120, 130, 150, and 160 includes a device having a communication module capable of transmitting and receiving data over the network 140. For example, each network computing device 110, 120, 130, 150, and 160 can include a server, desktop computer, laptop computer, tablet computer, a television with one or more processors embedded therein and / or coupled thereto, smart phone, handheld computer, personal digital assistant ("PDA"), or any other wired or wireless, processor-driven device. In the example depicted in Figure 1, the network computing devices 110, 120, 130, 150, and 160 are operated by users 101, merchant beacon device 120 operators, merchant point of sale ("POS") device 130 operators, issuer system 150 operators, and payment processing system 160, respectively.

An example user computing device 110 comprises an antenna 111, a Bluetooth low energy ("BLE") controller 112, a payment application 113, a user interface 115, a data storage unit 116, a global positioning system ("GPS") component 117, a web browser 118, and a communication application 119.

In an example, the antenna 111 is a means of communication between the user computing device 110 and a merchant beacon device 120. In an example, a Bluetooth low energy ("BLE") controller 112 outputs through the antenna 111 a radio signal, or listens for radio signals from the merchant beacon device 120. In another example a Wi-Fi controller or a near field communication ("NFC") controller is used.

In an example, the BLE controller 112 is capable of sending and receiving data, performing authentication and ciphering functions, and directing how the user computing device 110 will listen for transmissions from the merchant beacon device 120 or configuring the user computing device 110 into various power-save modes according to BLE-specified procedures. In another example, the user computing device 110 comprises a Wi-Fi controller or an NFC controller capable of performing similar functions. An example BLE controller 112 communicates with the payment application 113 and is capable of sending and receiving data over a wireless, BLE communication channel. In another example, a Wi-Fi controller 112 or NFC controller 112 performs similar functions as the BLE controller 112 using Wi-Fi or NFC protocols. In an example, the BLE controller 112 activates the antenna 111 to create a wireless communication channel between the user computing device 110 and the merchant beacon device 120. The user computing device 110 communicates with the merchant beacon device 120 via the antenna 111. In an example, when the user computing device 110 has been activated, the BLE controller 112 polls through the antenna 111 a radio signal, or listens for radio signals from the merchant beacon device 120.

In an example, the payment application 113 is a program, function, routine, applet, or similar entity that exists on and performs its operations on the user computing device 110. In certain examples, the user 101 must install the payment application 113 and/or make a feature selection on the user computing device 110 to obtain the benefits of the techniques described herein. In an example, the user 101 may access payment application 113 on the user computing device 110 via the user interface 115. In an example, the payment application 113 may be associated with the payment processing system 160. In another example, the payment application 113 may be associated with a merchant system associated with the merchant beacon device 120 and the merchant point of sale device 130. In yet another example, two payment applications 113 exist, one associated with the merchant system and another associated with the payment processing system 160.

In an example, the user interface 115 enables the user 101 to interact with the payment application 113 and/or web browser 118. For example, the user interface 115 may be a touch screen, a voice-based interface, or any other interface that allows the user 101 to provide input and receive output from an application or module on the user computing device 110. In an example, the user 101 interacts via the user interface 115 with the payment application 113 and/or web browser 118 to configure user 101 accounts on the payment processing system 160. In this example, the user 101 may add, delete, and/or modify payment account information associated with the user's 101 account via the payment application 113 by actuating one or more objects on the user interface 115. In another example, the user 101 interacts via the user interface 115 with the payment application 113 and/or the web browser 118 to enable payments, if needed. In an example, the user interface 115 enables the user 101 to submit a signature of the user 101 to the payment application 113 and/or payment processing system 160. For example, the user interface 115 may comprise a pen pad that enables the user 101 to draw his signature on the user interface 115 of the user computing device 110 for submission to the payment application 113 and/or payment processing system 160.

In an example, the data storage unit 116 comprises a local or remote data storage structure accessible to the user computing device 110 suitable for storing information. In an example, the data storage unit 116 stores encrypted information, such as HTML5 local storage.

In an example, the global positioning system ("GPS") component 117 may be any component, application, or function of the user computing device 110.

In an example, the user 101 can use a communication application 119, such as a web browser 118 application or a stand-alone application, to view, download, upload, or otherwise access documents or web pages via a distributed network 140.

In an example, the web browser 118 can enable the user 101 to interact with web pages using the user computing device 110. In an example, the user 101 may access the user's 101 account maintained by the payment processing system 160 via the web browser 118. In another example, the user 101 may access the a merchant system website via the web browser 118. In certain examples described herein, one or more functions performed by the payment application 113 may also be performed by a web browser 118 application associated with the payment processing system 160.

In an example, the communication application 119 can interact with web servers or other computing devices connected to the network 140, including the user computing device 110 and a web server of a merchant system.

In certain examples, one or more functions herein described as performed by the payment application 113 may also be performed by a web browser 118 application, for example, a web browser 118 application associated with a merchant system website or associated with the payment processing system 160. In certain examples, one or more functions herein described as performed by the payment application 113 may also be performed by the user computing device 110 operating system. In certain examples, one or more functions herein described as performed via the web browser 118 may also be performed via the payment application 113.

An example merchant beacon device 120 comprises an antenna 121 and a BLE controller 122. In an example, a merchant system location comprises one or more merchant beacon devices 120 installed at the merchant system location. In an example, each installed merchant beacon device 120 is associated by a payment processing system 160 with a particular merchant point of sale device 130 installed at the merchant location. In an example, the merchant beacon device 120 is installed in the vicinity of a drive-through window at the merchant system location. In an example, the payment processing system 160 may comprise a database that correlates merchant beacon device 120 identifiers with merchant point of sale devices 130 identifiers. For example, a merchant point of sale device 130 identifier may comprise hardware identifier specific to the device such as a serial number or a MAC ID. In another example, a merchant beacon device 120 identifier may comprise a hardware identifier specific to the beacon device or an identifier generated by the payment processing system 160 and stored in the merchant beacon device 120. An example merchant beacon device 120 is programmed to broadcast, emit, or otherwise transmit a particular merchant beacon device 120 identifier over a wireless network 140, for example, a BLE network, to any user computing devices 110 within a threshold distance required to maintain the wireless network 140. For example, the wireless network may comprise a BLE network 140, a Wi-Fi network 140, a Bluetooth network 140, an NFC network 140, or any other appropriate wireless network 140.

In an example, the antenna 121 is a means of communication between the user computing device 110 and a merchant beacon device 120. In an example, a BLE controller 122 outputs through the antenna 121 a radio signal, or listens for radio signals from the user computing device 110. In another example a Wi-Fi controller, a Bluetooth controller or a near field communication ("NFC") controller is used. In an example, the BLE controller 122 outputs through the antenna 121 a radio signal, or listens for radio signals from the user computing device 110.

In an example, the BLE controller 122 is capable of sending and receiving data, performing authentication and ciphering functions, and directing how merchant beacon device 120 will listen for transmissions from the user computing device 110 or configuring the merchant beacon device 120 into various power-save modes according to BLE-specified procedures. In another example, the merchant beacon device 120 comprises a Wi-Fi controller, Bluetooth controller or an NFC controller capable of performing similar functions. An example BLE controller 122 communicates with the payment application 113 and is capable of sending and receiving data over a wireless, Wi-Fi communication channel. In another example, a Wi-Fi controller 122 or NFC controller 122 performs similar functions as the BLE controller 122 using Wi-Fi or NFC protocols. In an example, the BLE controller 122 activates the antenna 121 to create a wireless communication channel between the user computing device 110 and the merchant beacon device 120. The merchant beacon device 120 communicates with the user computing device 110 via the antenna 121. In an example, when the merchant beacon device 120 has been activated, the BLE controller 122 polls through the antenna 121 a radio signal, or listens for radio signals from the user computing device 110.

An example merchant point of sale ("POS") device 130 comprises a payment application 133, a user interface 135, a data storage unit 136, and a communication application 139.

In an example, the payment application 133 is a program, function, routine, applet, or similar entity that exists on and performs its operations on the merchant point of sale device 130. In certain examples, the merchant POS device operator 102 or other merchant system operator must install the payment application 133 and/or make a feature selection on the merchant POS device 130 to obtain the benefits of the techniques described herein. In an example, the merchant POS device operator 102 may access the payment application 133 on the merchant POS device 130 via the user interface 135. In an example, the payment application 133 may be associated with the payment processing system 160. In another example, the payment application 133 may be associated with a merchant system associated with the merchant beacon device 120. In yet another example, two payment applications 133 exist, one associated with the merchant system and another associated with the payment processing system 160.

In an example, the user interface 135 enables the merchant POS device operator 102 to interact with the merchant POS device 130. For example, the user interface 135 may be a touch screen, a voice-based interface, or any other interface that allows the merchant POS device operator 102 to provide input and receive output from an application on the merchant POS device 130. In an example, the merchant POS device operator 102 interacts via the user interface 135 with the payment application 133.

In an example, the data storage unit 136 comprises a local or remote data storage structure accessible to the merchant POS device 130 suitable for storing information. In an example, the data storage unit 136 stores encrypted information, such as HTML5 local storage.

In an example, the communication application 139, such as a web browser application or a stand-alone application, enables an operator of the merchant POS device 130 to view, download, upload, or otherwise access documents or web pages via a distributed network 140. For example, the communication application 139 may enable communication over the network 140 with the payment processing system 160.

An example issuer system 150 approves or denies a payment authorization request received from the payment processing system 160. In an example, the issuer system 150 communicates with the payment processing system 160 over the network 140. In an example, the issuer system 150 communicates with an acquirer system to approve a credit authorization and to make payment to the payment processing system 160 and/or merchant system. For example, the acquirer system is a third party payment processing company.

An example payment processing system 160 comprises an account management component 161, a data storage unit 166, a transaction processing component 167, a server 168, and a website 169.

In an example, the account management component 161 manages one or more user 101 accounts. In an example, a user 101 account may comprise a digital wallet account, an email account, a social networking account, or any other appropriate account associated with the payment processing system 160. In an example, the account management component 161 communicates with a payment application 113 operating on a user computing device 110 associated with a user 101 having a user 101 account with the payment processing system 160. In an example, the user 101 enters payment account information into the user 101 account via the payment application 113 and the account management component 161 receives the payment account information over the network 140 and associates the received payment account information with the user 101 account.

In an example, the data storage unit 166 comprises a local or remote data storage structure accessible to the payment processing system 160 suitable for storing information. In an example, the data storage unit 166 stores encrypted information, such as HTML5 local storage.

In an example, the transaction processing component 167 receives transaction details from a merchant POS device 130 and a request to initiate a transaction. Example transaction details comprise merchant system account information, a total amount of the transaction, and a user 101 selection of a user 101 payment account associated with the user's 101 account with the payment processing system 160. For example, the user's 101 account is a digital wallet account comprising one or more payment account information corresponding to one or more respective payment accounts of the user 101. In an example, the transaction processing component 167 extracts payment account information from the user 101 account corresponding to the user 101 selection of the user 101 payment account received in the transaction details from the merchant POS device 130. In an example, the transaction processing component 167 transmits a payment authorization request to an issuer system 150 or other appropriate financial institution associated with the payment account selected by the user 101 for use in the transaction. An example payment authorization request may comprise merchant system payment account information, user 101 payment account information, and a total amount of the transaction. In an example, after the issuer system 150 processes the payment authorization request, the transaction processing component 167 receives an approval or denial of the payment authorization request from the issuer system 150 over the network 140. In an example, the transaction processing component 167 transmits a receipt to the merchant POS device 130 and/or the user computing device 110 comprising a summary of the transaction.

In an example, the web server 168 provides content accessible by the user 101 through the web browser 118 and/or payment application 113 on the user computing device 110, including but not limited to html documents, images, style sheets, and scripts. In an example, the server 168 supports the payment processing system website 169.

In an example, the payment processing system website 169 comprises a website that user 101 may access via the web browser 118 and/or payment application 113 on the user computing device 110. In an example, user 101 may access the user's 101 digital wallet account via the payment processing system website 695.

It will be appreciated that the network connections shown are example and other means of establishing a communications link between the computers and devices can be used. Moreover, those having ordinary skill in the art having the benefit of the present disclosure will appreciate that the user computing device 110, the merchant beacon device 120, the merchant point of sale device 130, the issuer system 150, and the payment processing system 160 illustrated in Figure 1 can have any of several other suitable computer system configurations. For example, a user computing device 110 embodied as a mobile phone or handheld computer may or may not include all the components described above.

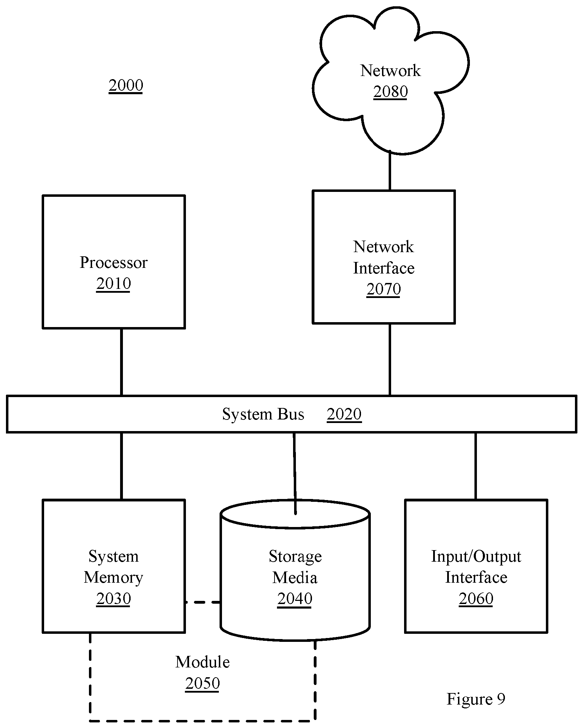

In examples, the network computing devices and any other computing machines associated with the technology presented herein may be any type of computing machine such as, but not limited to, those discussed in more detail with respect to Figure 9. Furthermore, any modules associated with any of these computing machines, such as modules described herein or any other modules (scripts, web content, software, firmware, or hardware) associated with the technology presented herein may by any of the modules discussed in more detail with respect to Figure 9. The computing machines discussed herein may communicate with one another as well as other computing machines or communication systems over one or more networks, such as network 140. The network 140 may include any type of data or communications network, including any of the network technology discussed with respect to Figure 9.

### Example Processes

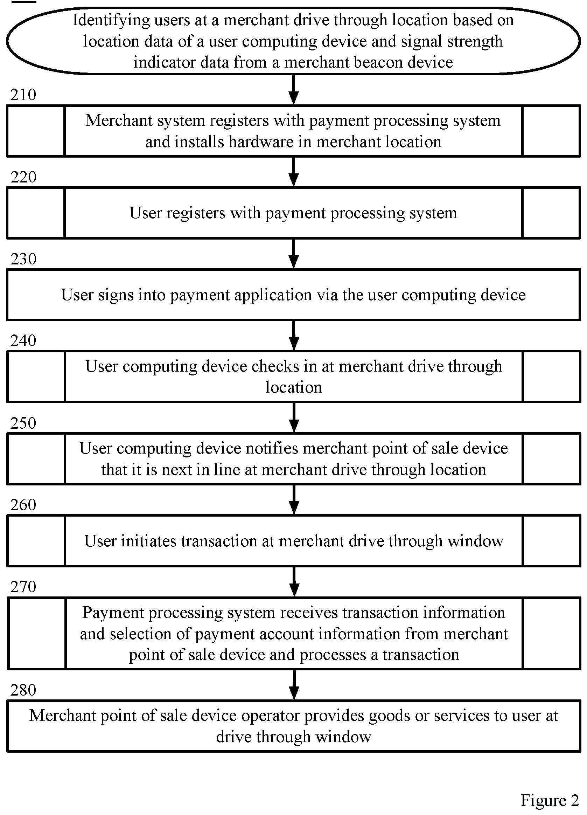

The example methods illustrated in Figures 2-8 are described hereinafter with respect to the components of the example operating environment 100. The example methods of Figures 2-8 may also be performed with other systems and in other environments.

Figure 2 is a block diagram depicting a method 200 for identifying users 101 at a merchant drive-through location based on location data of a user computing device 110 and signal strength indicator data from a merchant beacon device 120, in accordance with certain examples. The method 200 is described with reference to the components illustrated in Figure 1.

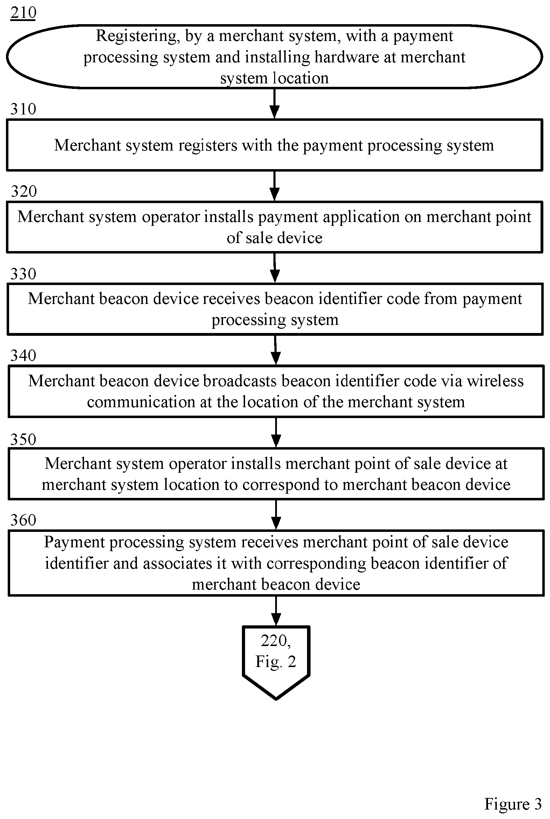

In block 210, the merchant system registers with the payment processing system 160 and installs hardware in a merchant location. The method for registering, by a merchant system, with a payment processing system 160 and installing hardware at a merchant system location is described in more detail hereinafter with reference to the method described in Figure 3.

Figure 3 is a block diagram depicting a method 210 for registering, by a merchant system, with a payment processing system 160 and installing hardware at a merchant system location, in accordance with certain examples. The method 210 is described with reference to the components illustrated in Figure 1.

In the examples described herein, the merchant system installs hardware at a merchant drive-through window, for example, a drive-through window at a fast food restaurant. However, the methods described herein are applicable at other merchant locations such as ticketing counters, grocery store checkouts, or other merchant locations where a user waits in a line to conduct a transaction or otherwise approaches a merchant point of sale device along a predetermined physical path. In the examples described herein, the merchant system does not need to install hardware at the example merchant system location in any particular order. The method 210 describes one example method of installing hardware at the merchant location. However, the merchant system or other system installing the merchant hardware does not need to install the merchant POS device 130 or the merchant beacon device 120 in the order described herein.

In block 310, a merchant system registers with the payment processing system 160. In an example, an agent of the merchant system accesses a payment processing system 160 website 169 and registers for a merchant account with the payment processing system 160 via the website 169. In an example, the merchant system adds payment account information to the merchant account managed by the payment processing system 160. In an example, the merchant system comprises one or more merchant system locations. For example, the merchant system may comprise one or more physical store locations. An example merchant location comprises one or more merchant point of sale ("POS") devices 130. In an example, one or more merchant POS device operators 102 operate the one or more merchant POS devices 130 at the merchant system location.

In block 320, a merchant system operator installs the payment application 133 on the merchant POS device 130. In another example, the merchant system operator purchases a merchant POS device 130 from the payment processing system 160 or otherwise obtains the merchant POS device 130 with the payment application 133 preinstalled on the merchant POS device 130. In an example, the merchant POS device 130 is able to communicate with the payment processing system 160 over a network 140. In an example, the merchant POS device 130 communicates with the payment processing system 160 via the payment application 133. For example, the merchant POS device 130 may be able to transmit transaction details to the payment processing system 160 via the payment application 133 over the network 140 to enable the payment processing system 160 to process a transaction. In another example, the merchant POS device 130 may be able to receive a receipt from the payment processing system 160 that notifies a merchant POS device operator 102 as to whether a transaction was successful or not. In an example, the merchant system installs the merchant POS device 130 near the inside of a drive-through window at the merchant system location. In another example, the merchant system installs the merchant POS device 130 at a checkout area of the merchant system location.

In block 330, the merchant beacon device 120 receives a beacon identifier from the payment processing system 160. In an example, the merchant system receives a beacon identifier from the payment processing system 160 and installs or otherwise saves the beacon identifier on the merchant beacon device 120. In another example, the beacon identifier is saved on the merchant beacon device 120 before the merchant system receives and installs the merchant beacon device 120. In an example, the merchant beacon device 120 receives the beacon identifier over the network 140 from the payment processing system 160. In another example, the merchant beacon device 120 receives the beacon identifier from the payment processing system 160 via the merchant point of sale device 130 or otherwise receives the beacon device identifier. In an example, a merchant system operator installs the merchant beacon device 120 in proximity to a merchant POS device 130. In an example, the merchant system operator installs a plurality of merchant beacon devices 120, each merchant beacon device 120 in proximity to one or more associated merchant POS devices 130. An example merchant beacon device 120 is able to broadcast a signal comprising the beacon device identifier via a BLE network 140 or other wireless communication network to one or more user computing devices 110 located within a threshold proximity to the merchant beacon device 120. For example, the threshold proximity depends on the network 140 communication protocol utilized by the merchant beacon device 120. In another example, one or more functions described as performed by the merchant beacon device 120 may instead be performed by the merchant POS device 130. In an example, the merchant system installs the merchant beacon device 120 in proximity to the merchant POS device 130. For example, the merchant system installs the merchant beacon device 120 near the merchant POS device 130 at a drive-through window at the merchant system location.

In block 340, the merchant beacon device 120 broadcasts the beacon identifier via wireless communication at the location of the merchant system. For example, the merchant beacon device 120 may broadcast, emit, or otherwise transmit data comprising the beacon identifier via Bluetooth low energy ("BLE"), Wi-Fi, Bluetooth, near field communication ("NFC"), or other appropriate communication protocol operable to transmit signals to one or more user computing devices 110 at the merchant system location or establish a network 140 connection between the merchant beacon device 120 and the one or more user computing devices 110 located at the merchant system location within a threshold proximity to the merchant beacon device 120.

In block 350, a merchant system operator installs the merchant POS device 130 at the merchant system location to correspond to the merchant beacon device 120. In an example, a merchant beacon device 120 is installed in proximity to a particular merchant POS device 130. In another example, a merchant beacon device 120 is installed in proximity to two or more particular merchant POS devices 130. In the examples described herein, the merchant system installs hardware at a merchant drive-through window, for example, a drive-through window at a fast food restaurant. However, in other examples, the merchant system installs the hardware at a ticketing counter, at a grocery store checkout, or at another merchant location where a user waits in a line to conduct a transaction or otherwise approaches a merchant point of sale device along a predetermined physical path. For example, the predetermined physical path of a drive-through location comprises the path a user's 101 car takes as the user drives along the side of the merchant location to approach the purchase window where the merchant POS device 130 and merchant beacon device 120 are located.

In block 360, the payment processing system 160 receives a merchant point of sale device 130 identifier and associates it with the corresponding beacon identifier of the merchant beacon device 120. In an example, the merchant system and/or the payment processing system 160 configures the merchant point of sale device 130 so that the merchant point of sale device 130 is able to communicate with the payment processing system 160 over the network 140. An example merchant point of sale device 130 identifier comprises a hardware identifier, a media access control ("MAC") address, or other useful or relevant identifier associated with the merchant point of sale device 130. In an example, the payment processing system 160 comprises a database comprising merchant point of sale device 130 identifiers and associated beacon identifiers for merchant beacon device 120 identifiers for a particular merchant system location. In an example, the merchant point of sale device 130 transmits the merchant beacon device 120 identifier code to the payment processing system 160. For example, the merchant point of sale device 130, during the setup and installation process, may establish a network 140 connection with the merchant beacon device 120 and receive the merchant beacon device 120 identifier over the network 140. In another example, the payment processing system 160 receives the merchant point of sale device 130 identifier, extracts one or more merchant beacon device 120 identifiers from the database, and associates the merchant point of sale device 130 identifier with one or more of the one or more extracted merchant beacon device 120 identifiers. In yet another example, the merchant system operator installs the one or more merchant beacon devices 120 after installing the one or more merchant point of sale devices 130. In this example, the payment processing system 160 generates a merchant beacon device identifier to associate with a merchant point of sale device 130 identifier and transmits the generated merchant beacon device 120 identifier to the merchant system. In this example, the merchant system operator configures the merchant beacon device 120 to broadcast, emit, or otherwise transmit the merchant beacon device 120 identifier assigned by the payment processing system 160 over a network 140.

In an example, the merchant beacon device 120 identifier comprises a network name detectable by a user computing device 110 performing a scan of available BLE, Bluetooth, Wi-Fi, or NFC networks. For example, at a "merchant A" store located at 123 Peachtree St. Atlanta, GA, the merchant beacon device 120 identifier may read "Merchant A 123 Peachtree St." or "Merchant A Peachtree St. Atlanta" or other appropriate name that identifies the merchant location. In this example, a user computing device 110 within a sufficient proximity to the merchant beacon device 120 may receive the merchant beacon device 120 identifier among other identifiers over a BLE network 140 or other wireless network 140.

In certain examples, the merchant beacon device 120 is a component of the merchant POS device 130 or are wirelessly or physically connected to the merchant POS device 130 and controlled by one or more processors of the merchant POS device 130. In certain examples, certain functions described herein as performed by the merchant beacon device 120 may also be performed by the merchant POS device 130.

From block 360, the method 210 proceeds to block 220 of Figure 2.

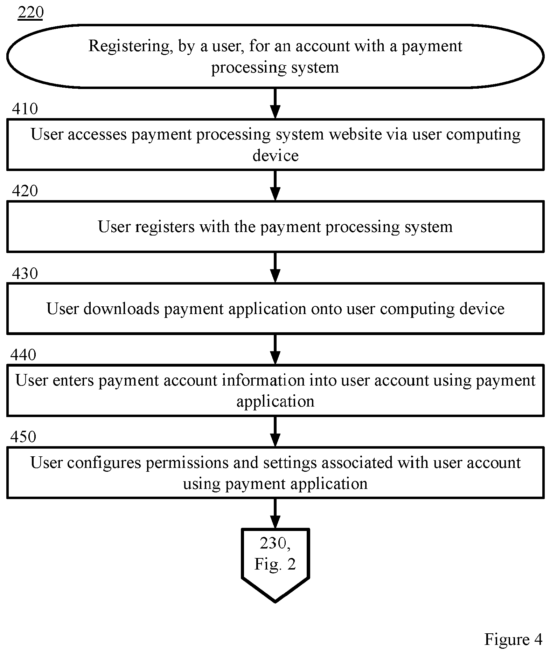

Returning to Figure 2, in block 220, the user 101 registers with the payment processing system 160. The method for registering, by a user 101, for an account with a payment processing system 160 is described in more detail hereinafter with reference to the method 220 described in Figure 4.

Figure 4 is a block diagram depicting a method 220 for registering, by a user 101, for an account with a payment processing system 160, in accordance with certain examples. The method 220 is described with reference to the components illustrated in Figure 1.

In block 410, the user 101 accesses the payment processing system 160 website 169. For example, the user 101 accesses the payment processing system 160 via the web browser 118 of the user computing device 110. In another example, the user 101 may otherwise contact the payment processing system 160 to register for a user 101 account.

In block 420, the user 101 registers with the payment processing system 160. The user 101 may obtain a user account number, receive the appropriate applications and software to install on the user computing device 110, request authorization to participate in payment processing, or perform any action required by the payment processing system 160 to establish a user 101 account with the payment processing system 160. The user 101 may utilize the functions of the user computing device 110, such as the user interface 115 and the web browser 118, to register and configure a user 101 account.

In block 430, the user 101 downloads the payment application 113 onto the user computing device 110. In another example, the user 101 purchases or otherwise obtains the user computing device 110 comprising the payment application 113 preinstalled on the user computing device 110. In an example, the payment application 113 operating on the user computing device 110 is able to communicate with the payment processing system 160 over the network 140.

In block 440, the user 101 enters payment account information into the user 101 account using the payment application 113. In an example, the user 101 may enter payment account information associated with one or more user 101 payment accounts, for example, one or more credit accounts, one or more bank accounts, one or more stored value accounts, and/or other appropriate accounts into the user 101 account maintained by the payment processing system 160. For example, to enter payment account information associated with a user 101 credit account, the user 101 enters a credit card number, expiration date, address, user 101 name on credit card, and/or other appropriate information associated with the credit account via the payment application 113. In this example, the payment application 113 communicates the credit account data entered by the user 101 to the payment processing system 160 via the network 140 and the payment processing system 160 associates the credit account data with the user 101 account.

In block 450, the user 101 configures permissions and settings associated with the user 101 account using the payment application 113. In an example, the user 101 may configure user 101 account settings or add, delete, or edit payment account information via the payment application 113. In an example, the user 101 may select an option to enable or disable the permission of the payment processing system 160 to process transactions. For example, a transaction comprises a transaction wherein the user 101 does not need to interact with the user computing device 110 or requires minimal user 101 interaction with the user computing device 110 to initiate a transaction with the merchant system.

From block 450, the method 220 proceeds to block 230 in Figure 2.

Returning to block 230, in Figure 2, the user 101 signs into the payment application 113 via the user computing device 110 either before or after entering the merchant system location. In an example, by signing in to the payment application 113 the user 101 enables the payment processing system 160 to process transactions initiated by the user 101 at the merchant system location and log location data of the user computing device 110 via the payment application 113. In another example, the user 101 opens the payment application 113 on the user computing device 110 and enters the merchant system location with the user computing device 110 already signed in to the payment application 113. In another example, the user 101 signs in to the payment application 113 at a time before entering the merchant system location and configures one or more settings on the payment application 113 to permit the payment processing system 160 to process transactions and log location data of the user computing device 110. In this example, the user 101 does not have to sign in while at the merchant location to enable a transaction. In an example, entering the merchant location comprises entering, in a vehicle, a drive-through lane at the merchant location. Additionally, the user 101 may access the payment application 113 and configure one or more settings to revoke permission for the payment processing system 160 to process transactions or to otherwise disable the logging of location data of the user computing device 110.

In an example, the user 101 may have a username and password associated with the user 101 account maintained by the payment processing system 160. In an example, the user 101 opens the payment application 113 on the user computing device 110 and enters a username and/or password via the user interface 115 to sign in to the payment application 113. In an example, when the user 101 is signed in to the payment application 113, the payment application is able to communicate with the payment processing system 160 over the network 140. In this example, when the user 101 is not signed in to the payment application 113, the payment application does not communicate with the payment processing system 160 even if the a network 140 connection is available. In an example, the user 101 may sign out of the payment application 113 at any time by actuating one or more objects on the user interface 115 of the user computing device 110. In an example, after signing in to the payment application 113, the user 101 configure one or more user 101 account settings, add, edit, or delete user 101 payment account information, and/or change user 101 preferences. In certain examples, a user 101 may be required to make a feature selection to obtain the benefits of the techniques described herein. For example, the user 101 may have to enable one or more user 101 account settings to enable transactions according to the methods described herein.

In an example, payment application 113 may provide options, data, configurable alerts, and other suitable features to the user 101. For example, the payment application 113 may comprise a listing of merchant systems and merchant locations that participate in payment transactions according to one or more of the methods described herein. The listing may be updated periodically from the payment processing system 160. The payment application 113 may notify the user 101 when the user 101 is within a configured vicinity of a participating merchant system. The payment application 113 may provide the user 101 with options to update payment preferences. The payment application 113 may provide the user 101 with a listing of recent transactions. The payment application 113 may provide any other suitable information to the user 101.

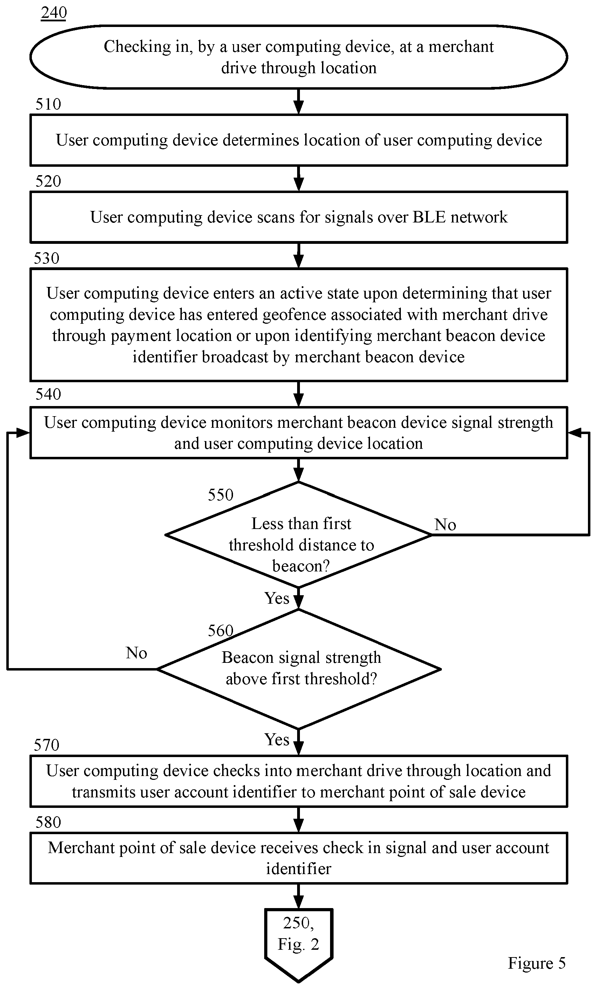

In block 240, the user computing device 110 checks in at the merchant drive-through location. The method of check-ing in, by a user computing device 110, at a merchant drive-through location is described in more detail hereinafter with reference to the method 240 described in Figure 5. The examples described herein describe a user 101 check-ing in at a merchant drive-through location via a user computing device 110. However, in other examples, the user 101 checks in at a merchant location comprising a grocery store, ticketing counter, or other merchant location via the user computing device 110.

Figure 5 is a block diagram depicting a method 240 for check-ing in, by a user computing device, at a merchant drive-through location. The method 240 is described with reference to the components illustrated in Figure 1.

In the examples described herein, the user computing device 110 is initially in an inactive state. In an example, in the inactive state, the user computing device 110 determines the location of the user computing device 110 at longer intervals than when the user computing device 110 is in an active state or a semi-active state. In this example, in the inactive state, the user computing device 110 scans for signals over the BLE network 140 at longer intervals than when the user computing device 110 is in the active state or semi-active state. For example, the user computing device 110 determines the location of the user computing device 110 at five minute intervals while in the inactive state and at fifteen second intervals while in the active state. In another example, the user computing device 110 scans for signals over the BLE network 140 at three minute intervals in the inactive state, thirty second intervals in the semi-active state, and at five second intervals while in the active state. In another example, the user computing device 110 can be in an active or semi-active state for logging location data and an inactive state with respect to scanning for signals over the BLE network 140. In yet another example, the user computing device 110 can be in an inactive state for logging location data and an active or semi-active state with respect to scanning for signals over the BLE network 140. In an example, the user computing device 110 remains in an inactive state while outside of the geofence boundary associated with the merchant POS device 130, transitions from the inactive state to a semi-active state when moving to between the geofence boundary and the check-in point, and transitions from the semi-active state to the active state when moving to within the check-in point. In this example, the user computing device 110 remains in the active state while within the check-in point, transitions from the active state to the semi-active state when moving to between the check-in point and the geofence boundary associated with the merchant POS device 130, and transitions from the semi-active state to the inactive state when moving to outside of the geofence boundary.

In block 510, the user computing device 110 determines the location of the user computing device 110. In an example, determining the location of the user computing device 110 comprises logging, by the user computing device 110, a current longitude and latitude of the user computing device 110 using the GPS component 117 of the user computing device 110. In another example, determining the location of the user computing device 110 comprises determining the IP address of nearby wireless communication devices in range of the user computing device 110. In an example, the user 101 activates a navigation application on the user computing device 110 and enters the merchant location as a destination. In this example, the user computing device 110 continually or periodically determines the location of the user computing device 110 as the user 101 progresses along the route calculated by the user computing device 110.

In block 520, the user computing device 110 scans for signals over a BLE network 140. The user computing device 110 may recognize signals broadcast over a BLE network 140, including signals from the merchant beacon device 120 via wireless communication at the location of the merchant system. The user computing device 110 may be configured to search for beacons or other wireless signals. In an example, the user computing device 110 and the merchant beacon device 120 establish a BLE wireless network 140 connection. In other examples, the user computing device 110 and the merchant beacon device 120 establish a Bluetooth, Wi-Fi, NFC, or other appropriate network 140 connection or otherwise receive data or signals over a Bluetooth, Wi-Fi, NFC, or other appropriate network 140 connection from the merchant beacon device 120. Upon entering the range of the signal of the merchant beacon device 120, the user computing device 110 receives the merchant beacon device 120 identifier.

In block 530, the user computing device 110 enters an active state upon determining that the user computing device 110 has entered a geofence boundary associated with the merchant POS device 130 or upon identifying the merchant beacon device 120 identifier broadcast by the merchant beacon device 120. In another example, the user computing device 110 enters a semi-active state upon determining that the user computing device 110 has entered a geofence boundary associated with the merchant POS device 130 or upon identifying the merchant beacon device 120 identifier broadcast by the merchant beacon device 120.

As previously discussed, in the examples described herein, the user computing device 110 is initially in an inactive state. In an example, in the inactive state, the user computing device 110 determines the location of the user computing device 110 at longer intervals than when the user computing device 110 is in an active state. In this example, in the inactive state, the user computing device 110 scans for signals over the BLE network 140 at longer intervals than when the user computing device 110 is in the active state or semi-active state. For example, the user computing device 110 scans for signals over the BLE network 140 at five minute intervals while in the inactive state and at fifteen second intervals while in the active state. In another example, the user computing device 110 scans for signals over the BLE network 140 at three minute intervals in the inactive state, thirty second intervals in the semi-active state, and at five second intervals while in the active state.

In an example, in response to logging the location of the user computing device 110 while in the inactive state, the user computing device 110 requests, over the network 140, geofence boundaries from the payment processing system 160 associated with merchant locations in the vicinity of the user computing device 110 and transmits the logged location of the user computing device 110 to the payment processing system 160. In this example, in the payment processing system 160 receives the logged location of the user computing device 110 and the request for geofence boundaries from the user computing device 110 over the network 140. In this example, the payment processing system 160 stores geofence boundaries associated with merchant POS devices 130 in a database of the payment processing system 160. An example geofence boundary comprises a geographic boundary around a particular merchant POS device 130. In an example, a geofence boundary comprises a circular boundary of a predefined radius around the particular merchant POS device 130. In an example, the payment processing system 160 accesses the database where the geofence boundaries are stored and extracts one or more geofence boundaries within a predefined proximity of the logged user computing device 110 location and transmits the extracted one or more geofence boundaries to the user computing device 110 over the network 140.

In an example, the user computing device 110 determines, in response to logging location data of the user computing device 110 in the inactive state, that the user computing device 110 has entered a particular geofence boundary of an associated merchant POS device 130 based on the logged location data. For example, the user computing device 110 determines that the most recently logged user computing device 110 location is within the geofence boundary associated with the merchant POS device 130 or detects the merchant beacon device 120 over the BLE network 140. In an example, in response to determining that the user computing device 110 has entered the geofence boundary or in response to detecting the merchant beacon device 120 over the BLE network 140, the user computing device 110 transitions from the inactive state to the active state or to the semi-active state. For example, the user computing device 110 begins actively or semi-actively scanning for signals over the BLE network 140. In an example, the user computing device 110, while in the inactive state, detects the merchant beacon device 120 identifier broadcast by the merchant beacon device 120 at the merchant drive-through location. In this example, the user computing device 110, in response to detecting the merchant beacon device 120 identifier, transitions from the inactive state to the active state or semi-active state. For example, the user computing device 110 begins actively scanning for signals over the BLE network 140 including actively monitoring the signal strength of signals received by the user computing device 110 from the merchant beacon device 120 over the BLE network 140.

In block 540, the user computing device 110 monitors the merchant beacon device 120 signal strength and the user computing device 110 location. In an example, the user computing device 110 begins actively scanning for signals over the BLE network 140 including actively monitoring the signal strength of signals received by the user computing device 110 from the merchant beacon device 120 over the BLE network 140 while in the active state or semi-active state. A signal strength indicator may comprise a degree, magnitude, or other number that describes a relative signal strength. An example signal strength indicator may be correlated to a distance between the user computing device 110 and the merchant beacon device 120. For example, a higher signal strength indicator indicates that the user computing device 110 is physically closer to the merchant beacon device 120 whereas a lower signal strength indicator indicates that the user computing device 110 is farther away from the merchant beacon device 120.

In an example, if the user computing device 110 determines that its location is less than a first threshold distance to the merchant beacon device 120 and that the merchant beacon device 120 signal strength determined by the user computing device 110 is above a first threshold signal strength, the user computing device 110 transmits a check-in signal over the BLE network 140 or other available wireless network 140 to the merchant POS device 130 comprising a user 101 account identifier. In another example, if the user computing device 110 determines that its location is less than a first threshold distance to the merchant beacon device 120 or that the merchant beacon device 120 signal strength determined by the user computing device 110 is above a first threshold signal strength, the user computing device 110 transmits a check-in signal over the network 140 to the payment processing system 160 comprising a user 101 account identifier. In the examples described herein, the user computing device 110 first determines whether it is less than the first threshold distance to the merchant beacon device 120 and then determines whether the signal strength of the merchant beacon device 120 is above the first threshold signal strength. In other examples, the user computing device 110 determines transmits the check-in signal in response to determining that the signal strength of the merchant beacon device 120 is above the first threshold signal strength and does not rely on location data. However, in other examples, the user computing device 120 first determines whether the signal strength of the merchant beacon device 120 is above the first threshold signal strength and then the user computing device 110 determines whether it is less than the first threshold distance to the merchant beacon device 120 based on location data. In yet other examples, the user computing device 120 determines whether the signal strength of the merchant beacon device 120 is above the first threshold signal strength simultaneously determining whether the user computing device 110 is less than the first threshold distance to the merchant beacon device 120 based on location data. In other examples, instead of or addition to transmitting the check-in signal, the user computing device 110 transitions from the semi-active state to the active state.

In block 550, the user computing device 110 determines whether the current user computing device 110 location is less than the first threshold distance to the merchant beacon device 120. In an example, the first threshold distance is a 100 meter radius or other appropriate radius from the merchant beacon device 120 located at the merchant drive-through window. In this example, the current user computing device 110 location comprises the location data most recently logged by the user computing device 110. In an example, if the user computing device 110 determines that its location is less than the first threshold distance to the merchant beacon device 120 and that the merchant beacon device 120 signal strength determined by the user computing device 110 is above the first threshold signal strength, the user computing device 110 transmits a check-in signal over the BLE network 140 or other available wireless network 140 to the merchant POS device 130 comprising a user 101 account identifier.

In an example, the first threshold distance corresponds to a 'check-in point' at which the user computing device 110 sends a check-in signal and a second threshold distance corresponds to a location at which the user computing device 110 deems the user computing device 110 to be next in line for payment at the drive-through window at the merchant location. In an example, the first signal strength threshold correlates to the check-in point at which the user computing device 110 sends the check-in signal and the second signal strength threshold correlates to the location at which the user computing device 110 deems the user computing device 110 to be next in line for payment at the drive-through window at the merchant location. For example, the first threshold distance is greater than the second threshold distance and the first signal strength threshold is less than the second signal strength threshold. At a physical merchant drive-through location, the check-in point may be at a drive-through parking lot and the next in point may be a location within ten feet of a drive-through payment window.

If the user computing device 110 determines that the current user computing device 110 location is not less than the first threshold distance to the merchant beacon device 120, the method 240 returns to block 540. For example, the user 101 is at or within the geofence boundary of the merchant POS device 130 at the merchant drive-through location but is not near enough to the merchant beacon device 120 at the merchant drive-through window for the user computing device 110 to send a check-in signal and user 101 account identifier to the merchant POS device 130 or to the payment processing system 160.

In block 540, the user computing device monitors the merchant beacon device 120 signal strength and the user computing device 110 location. In an example, the user computing device 110 remains in the semi-active state or active state and continues to log the location of the user computing device 110 and to scan for signals from the merchant beacon device 120 and monitor the signal strength of signals received from the merchant beacon device 120. In an example, the user computing device 110 continues to monitor the merchant beacon device 120 signal strength and the user computing device 110 location until the user computing device 110 determines either to transition to the inactive state or to transmit a check-in signal and user 101 account identifier to the merchant POS device 130 as previously described. In certain examples, in addition to or instead of transmitting the check-in signal, the user computing device 110 transitions from the semi-active state to the active state.

Returning to block 550, if the user computing device 110 determines that the current user computing device 110 location is less than the second threshold distance to the merchant beacon device 120, the method 240 proceeds to block 560. For example, the user 101 is at the merchant drive-through location and has begun to approach the merchant drive-through window where the merchant beacon device 120 is located. In an example, the user 101 moves to within the next in line point at the merchant drive-through location.

In block 560, the user computing device 110 determines whether the current merchant beacon device 120 signal strength is above a first threshold signal strength. In an example, if the user computing device 110 determines that its location is less than a first threshold distance to the merchant beacon device 120 and that the merchant beacon device 120 signal strength determined by the user computing device 110 is above the first threshold signal strength, the user computing device 110 transmits a check-in signal over the BLE network 140 or other available wireless network 140 to the merchant POS device 130 comprising a user 101 account identifier.

If the user computing device 110 determines that the current merchant beacon device 120 signal strength is not above the first threshold signal strength, the method 240 returns to block 540. For example, the user 101 is at the merchant drive-through location but is not near enough to the merchant beacon device 120 at the merchant drive-through window for the user computing device 110 to send a check-in signal and user 101 account identifier to the merchant POS device 130 or payment processing system 160 and/or transition to the semi-active state.

In block 540, the user computing device 110 monitors the merchant beacon device 120 signal strength and the user computing device 110 location. In an example, the user computing device 110 remains in the semi-active state or active state and continues to log the location of the user computing device 110 and to scan for signals from the merchant beacon device 120 and monitor the signal strength of signals received from the merchant beacon device 120. In an example, the user computing device 110 continues to monitor the merchant beacon device 120 signal strength and the user computing device 110 location until the user computing device 110 determines either to transition to the inactive state or to transmit a check-in signal and user 101 account identifier to the merchant POS device 130 or payment processing system 160 as previously described.

Returning to block 560, if the user computing device 110 determines that the merchant beacon device 120 signal strength is above the first threshold signal strength, the method 240 proceeds to block 570. In this example, the user 101 is close enough to the drive-through window where the merchant beacon device 120 is located or is otherwise close enough to the merchant beacon device 120 for the user computing device 110 to transmit a check-in signal and user 101 account identifier to the merchant POS device 130 so that the merchant POS device 130 may prepare for a potential transaction by the user 101.

In block 570, the user computing device 110 checks in to the merchant POS device 130 and transmits a user 101 account identifier to the merchant POS device 130. In an example, the user computing device 110 checks in to the merchant POS device 130 and transmits a user 101 account identifier to the merchant POS device 130 via the BLE network 140 in response to determining both that the most recently logged user computing device 110 location is less than the first threshold distance to the merchant beacon device 120 and that the merchant beacon device 120 signal strength determined by the user computing device 110 is above the first threshold signal strength. In another example, instead of transmitting the check-in signal directly to the merchant POS device 130 via the BLE network 140, the user computing device 110 transmits the check-in signal to the payment processing system 160, the payment processing system 160 receives the check-in signal via the network 140, the payment processing system 160 transmits the check-in signal to the merchant POS device 130 via the network 140, and the merchant POS device 130 receives the check-in signal via the network 140. In an example, check-ing in comprises transmitting a check-in request comprising a user 101 account identifier to the merchant POS device 130 via the BLE network 140 or via the payment processing system 160 over the network 140. In another example, if the user computing device 110 determines that its location is less than the first threshold distance to the merchant beacon device 120 or that the merchant beacon device 120 signal strength determined by the user computing device 110 is above the first threshold signal strength, the user computing device 110 transmits a check-in signal over the BLE network 140 or other available wireless network 140 to the merchant POS device 130 comprising a user 101 account identifier and the merchant POS device 130 receives the check-in signal over the BLE network 140. In an example, instead of transmitting the check-in signal and user 101 identifier directly to the merchant POS device 130 via the BLE network 140, the user computing device 110 transmits the check-in signal and user 101 identifier to the payment processing system 160 via the network 140. In this example, the payment processing system 160, upon receiving the check-in signal and user 101 identifier from the user computing device 110, forwards the received check-in signal and user 101 account identifier to the merchant POS device 130 at the merchant drive-through location via the network and the merchant POS device 130 receives the forwarded check-in signal and forwarded user 101 account identifier from the payment processing system 160 over the network 140. The check-in signal may comprise the user 101 account identifier, the user 101 account identifier may comprise the check-in signal, or the check-in signal may be separate from the user 101 account identifier and be transmitted to the merchant POS device 130 prior to, concurrently with, or after the user 101 account identifier is transmitted by the user computing device 110.

In block 580, the merchant POS device 130 receives the check-in signal and the user 101 account identifier. For example, the merchant POS device 130 receives the check-in signal via the BLE network 140 directly from the user computing device 110 or receives the check-in signal originating from the user computing device 110 via the payment processing system 160 via the network 140 as described previously.

In an example, the merchant POS device 130 receives the user 101 account identifier and check-in signal and requests payment account information from the payment processing system 160 over the network 140 with which to process a potential transaction of the user. In this example, the merchant POS device 130 receives the requested payment account information of the user 101 from the payment processing system 160 and temporarily stores the received payment account information associated with the user 101 account. In an example, the merchant POS device 130 deletes any received user 101 payment account information if it is not used by the merchant POS device 130 within a threshold period of time, for example, within fifteen minutes. In another example, the merchant POS device 130 does not request user 101 payment account information at this point when the merchant POS device 130 receives the check-in signal and waits until receiving a 'next in line' signal from the user computing device 110 before transmitting a request for user 101 payment account information to the payment processing system 160.

From block 580, the method 240 proceeds to block 250 in Figure 2.

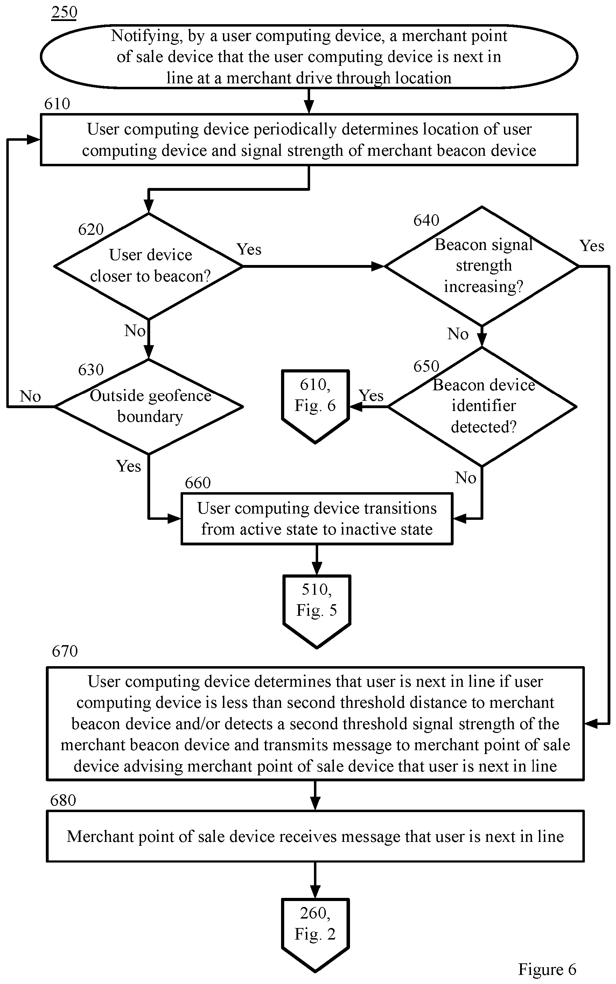

Returning to Figure 2, in block 250, the user computing device 110 notifies the merchant POS device 130 that it is next in line at the merchant drive-through location. The method of notifying, by a user computing device 110, a merchant POS device 130 that the user computing device 110 is next in line at a merchant drive-through location is described in more detail hereinafter with reference to the method 250 described in Figure 6.

Figure 6 is a block diagram depicting a method 250 for notifying, by a user computing device 110, a merchant POS device 130 that the user computing device 110 is next in line at a merchant drive-through location. The method 250 is described with reference to the components illustrated in Figure 1.

As previously discussed, in an example, the first threshold distance of the user computing device 110 to the merchant beacon device 120 corresponds to a 'check-in point' at which the user computing device 110 sends a check-in signal and a second threshold distance corresponds to a location at which the user computing device 110 deems the user computing device 110 to be next in line for payment at the drive-through window at the merchant location. Further, in an example, the geofence boundary associated with the merchant POS device 130 at the merchant location is equal to or farther away than the first threshold distance from the merchant beacon device 120. For example, the first threshold distance comprises a location 30 feet from the merchant beacon device 120, the second threshold distance comprises a location 10 feet from the merchant beacon device 120, and the geofence boundary comprises a 150 foot radius around the merchant POS device 130. In an example, the first threshold signal strength correlates to the check-in point at which the user computing device 110 sends the check-in signal and the second threshold signal strength correlates to the location at which the user computing device 110 deems the user computing device 110 to be next in line for payment at the drive-through window at the merchant location. In an example, the first threshold signal strength comprises a signal strength of greater than -105 dbm (decibel milliwatts) and the second threshold signal strength comprises a signal strength of greater than -65 dbm.

In certain examples, depending on the movement, driving, or other behavior of the user 101, the user computing device 110 may change position to be within or outside of the geofence boundary, between the geofence boundary and the check-in point, between the check-in point and the next in line point, or within the next in line point. Using the signal strength indicator detected from the merchant beacon device 120 and/or the location data logged by the user computing device 110, the user computing device 110 may determine between which boundaries and/or distance thresholds the user computing device 110 is located to take appropriate action. As previously discussed, if the user computing device 110 detects, based on the location data and detecting a merchant beacon device 120 identifier, that it has entered the geofence boundary, the user computing device 110 transitions from the inactive state to the active state or a semi-active state. Further, if the user computing device 110 detects that the user computing device 110 is between the check-in point and the next in line point, based on determining that the signal strength is greater than the first threshold signal strength and the distance from the merchant beacon device 120 is less than the first threshold distance, the user computing device 110 sends a check-in signal comprising a user 101 account identifier to the merchant POS device 130 at the merchant drive-through window. Finally, if the user computing device 110 detects that the user computing device 110 is within the next in line point, based on determining that the signal strength is greater than the second threshold signal strength and the distance from the merchant beacon device 120 is less than the second threshold distance, the user computing device 110 transmits a next in line signal to the merchant POS device 130. An example next in line signal comprises a user 101 account identifier.

In block 610, the user computing device 110 periodically determines the location of the user computing device 110 and the signal strength of the merchant beacon device 120. In an example, the user computing device 110 maintains the active state if the user computing device 110 remains within the geofence boundary. In this example, the user computing device 110 reverts to the inactive state if the user computing device 110 determines that it is located outside of the geofence boundary of the merchant POS device 130 at the merchant location and if the user computing device 110 does not detect a signal from the merchant beacon device 120. For example, the user computing device 110 reverts to the inactive state if the user 101 drives away or otherwise leaves the drive-through location.

In the examples described herein, the user computing device 110 first determines whether the user computing device 110 has moved closer to the merchant beacon device 120 based on logged location data of the user computing device 110 and then determines whether the merchant beacon device 120 signal strength is increasing based on logged merchant beacon device 120 signal strength data. However, in other examples, the user computing device 110 first determines whether the merchant beacon device 120 signal strength is increasing based on the logged merchant beacon device 120 signal strength data and then determines whether the user computing device 110 has moved closer to the merchant beacon device 120 based on logged location data. In other examples, the user computing device 110 only determines whether the user computing device 110 has moved closer to the merchant beacon device 120 based on logged location data and does not consider logged merchant beacon device 120 signal strength data. In yet another example, the user computing device 110 only determines whether the merchant beacon device 120 signal strength is increasing based on the logged signal strength data and does not consider logged location data of the user computing device 110. The user computing device 110 actively monitors the signal strength data and the user computing device 110 location data to determine to transmit an appropriate check-in or next in line signal or to determine to transition to a power saving inactive state.

In block 620, the user computing device 110 determines whether the user computing device 120 has moved closer to the merchant beacon device 120.

If the user computing device 110 determines that the user computing device 120 has not moved closer to the merchant beacon device 120, the method 250 proceeds to block 630. For example, the user 101 is waiting in line in the drive-through lane and inches forward while waiting behind other vehicles in the line.

In block 630, the user computing device 110 determines whether the user computing device is outside the geofence boundary associated with the merchant POS device 130 at the drive-through location. For example, the user computing device 110 compares the most recently logged location of the user computing device 110 against the geofence boundary associated with the merchant POS device 130 at the merchant drive-through location received from the payment processing system 160.

If the user computing device 110 determines that the user computing device 110 is outside the geofence boundary, the method 250 proceeds to block 660. For example, the user 101 drove away from the merchant drive-through location.

In block 660, the user computing device 110 transitions from an active state to an inactive state. In an example, in response to detecting, based on the logged location data of the user computing device 110 that the most recently logged location of the user computing device 110 corresponds to a location outside the geofence boundary associated with the merchant POS device 130 at the merchant drive-through location, the user computing device 110 transitions from the active state or semi-active state to the inactive state. For example, transitioning to the inactive state may increase the time intervals at which the user computing device 110 logs location data or at which the user computing device 110 scans for signals over the BLE network 140.

Returning to block 630, if the user computing device 110 determines that the user computing device 110 is not outside the geofence boundary, the method 250 returns to block 610. For example, the user 101 was previously located inside the geofence boundary and the user computing device 110 determines that the user 101 is still inside the geofence boundary and therefore remains in the active state.

In block 610, the user computing device periodically determines the location of the user computing device 110 and the signal strength of the merchant beacon device 120. In an example, the user computing device 110 maintains the active state if the user computing device 110 remains within the geofence boundary. In this example, the user computing device 110 reverts to the inactive state if the user computing device 110 determines that it is located outside of the geofence boundary of the merchant POS device 130 at the merchant location and if the user computing device 110 does not detect a signal from the merchant beacon device 120. For example, the user computing device 110 reverts to the inactive state if the user 101 drives away or otherwise leaves the drive-through location.

Returning to block 620, if the user computing device 110 determines that the user computing device 110 has moved closer to the merchant beacon device 120, the method 250 proceeds to block 640.

In block 640, the user computing device 110 determines whether the merchant beacon device 120 signal strength is increasing or decreasing. In the examples described herein, a negative correlation exists between the signal strength of the merchant beacon device 120 detected by the user computing device 110 over the BLE network 140 and the distance between the user computing device 110 and the merchant beacon device 120. For example, as the user computing device 110 approaches the merchant beacon device 120, the signal strength of the merchant beacon device 120 detected by the user computing device 110 increases. In this example, as the user computing device 110 is moved farther away from the merchant beacon device 120, the signal strength of the merchant beacon device 120 detected by the user computing device 110 decreases.

If the user computing device 110 determines that the merchant beacon device 120 signal strength is decreasing, the method 250 proceeds to block 650. For example, the user 101 begins to drive away or otherwise moves away from the merchant beacon device 120.

In block 650, the user computing device 110 determines whether the merchant beacon device 120 identifier is still detected.

If the user computing device 110 determines that the merchant beacon device 120 identifier is not detected, the method 250 proceeds to block 660. For example, not detecting the merchant beacon device 120 identifier indicates that the user 101 has left the geofence boundary associated with the merchant POS device 130.

In block 660, the user computing device 110 transitions from an active state to an inactive state. In an example, in response to detecting, based on the logged location data of the user computing device 110 that the most recently logged location of the user computing device 110 corresponds to a location outside the geofence boundary associated with the merchant POS device 130 at the merchant drive-through location, the user computing device 110 transitions from the active state or semi-active state to the inactive state. For example, transitioning to the inactive state may increase the time intervals at which the user computing device 110 logs location data or at which the user computing device 110 scans for signals over the BLE network 140.

In certain examples, instead of considering user computing device 110 location data and merchant beacon device 120 signal strength data sequentially, the user computing device 110 may simultaneously consider both sets of data when determining whether to remain in the active state, transition to the inactive state, or send a next in line signal to the merchant POS device 130.

Returning to block 650, if the user computing device 110 detects the merchant beacon device 120, the method 250 returns to block 610.

In block 610, the user computing device 110 periodically determines the location of the user computing device 110 and the signal strength of the merchant beacon device 120. In this example, the user computing device 110 reverts to the inactive state if the user computing device 110 determines that it is located outside of the geofence boundary of the merchant POS device 130 at the merchant location and if the user computing device 110 does not detect a signal from the merchant beacon device 120. For example, the user computing device 110 reverts to the inactive state if the user 101 drives away or otherwise leaves the drive-through location.

Returning to block 640, if the user computing device 110 determines that the merchant beacon device 120 signal strength is increasing, the method 250 proceeds to block 670.

In block 670, the user computing device 110 determines that the user 101 is next in line if the user computing device is less than second threshold distance to merchant beacon device 120 and/or detects a signal comprising signal strength greater than a second threshold signal strength of the merchant beacon device 120 and the user computing device 110 transmits a message to the merchant POS device 130 advising the merchant POS device 130 that the user 101 is next in line. For example, the user 101 drives his vehicle up to the payment window where the merchant beacon device 120 and merchant POS device 130 are located. As a result of approaching the payment window the signal strength of the merchant beacon device 120 as detected by the user computing device 110 increases past the maximum signal strength threshold and the distance between the user computing device 110 and the merchant beacon device 120 based on the logged location data indicates that the user computing device 110 is less than the second threshold distance from the merchant beacon device 120. Based on location of the user computing device 110 being less than the second threshold distance from the merchant beacon device 120 and/or based on the signal strength of the merchant beacon device 120 as detected by the user computing device 110 being higher than the second threshold signal strength, the user computing device 110 determines that the user 101 is next in line and transmits the next in line status message to the merchant POS device 130 via the BLE network 140. In another example, the user computing device 110 transmits the next in line signal to the payment processing system 160 via the network 140, the payment processing system 160 receives the next in line signal, the payment processing system 160 transmits the next in line signal to the merchant POS device 130 via the network 140, and the merchant POS device 140 receives the next in line signal via the network 140. In an example, the next in line status message comprises the user 101 account identifier.

In block 680, the merchant POS device 130 receives the message that the user 101 is next in line. In an example, the next in line status message comprises the user 101 account identifier and the merchant POS device 130 receives the user 101 account identifier. In certain examples, the merchant POS device 130 requested and received user 101 payment account data from the payment processing system 160 over the network 140 at a previous time in response to receiving a check-in signal and a user 101 account identifier from the user computing device 110. In other examples, the merchant POS device 130 does not request payment account data from the payment processing system 160 in response to receiving the check-in signal from the user computing device 110. In an example, the merchant POS device 130 receives the user 101 account identifier and next in line signal and requests payment account information from the payment processing system 160 over the network 140 with which to process a potential transaction of the user. In this example, the merchant POS device 130 receives the requested payment account information of the user 101 from the payment processing system 160 and temporarily stores the received payment account information associated with the user 101 account. In an example, the merchant POS device 130 deletes any received user 101 payment account information if it is not used by the merchant POS device 130 within a threshold period of time, for example, within fifteen minutes. In another example, the merchant POS device 130 does not request user 101 payment account information at this point when the merchant POS device 130 receives the next in line signal and waits until receiving an input from the merchant POS device operator 102 requesting payment account information for the user 101 in response to the user 101 requesting a transaction using the payment application 113.

From block 680, the method 250 proceeds to block 260 in Figure 2.

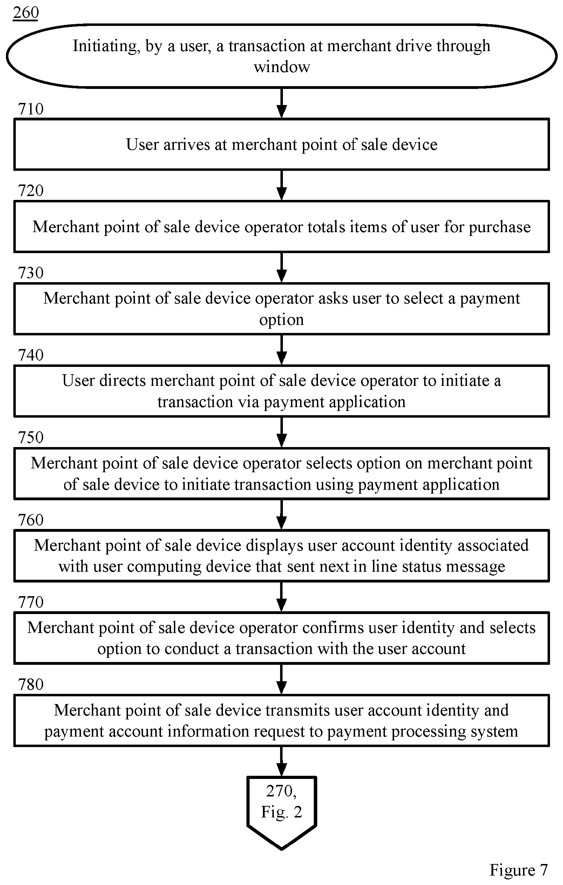

Returning to Figure 2, in block 260, the user 101 initiates a transaction at the merchant drive-through window. The method of initiating, by a user 101, a transaction at a merchant drive-through window is described in more detail hereinafter with reference to the method 260 described in Figure 7.

Figure 7 is a block diagram depicting a method 260 for initiating, by a user 101 a transaction at a merchant drive-through window. The method 260 is described with reference to the components illustrated in Figure 1.

In block 710, the user 101 arrives at the merchant POS device 130. In an example, at a time prior to approaching, while driving a vehicle, the merchant POS device 130 located at the merchant drive-through window, the user 101 orders one or more items for purchase at an order window or microphone. In this example, the user 101, carrying the user computing device 110, drives the vehicle along a drive-through lane to approach the drive-through window comprising both the merchant POS device 130 and the merchant beacon device 120 until the user 101 arrives at the merchant POS device 130. In another example, at a time prior to approaching the merchant POS device 130 in person, the user 101 browses the merchant system location and selects one or more items to purchase. In this example, the user 101 may collect the one or more items and carry, or otherwise transport via physical basket or shopping cart, the one or more items to the merchant POS device 130.

In block 720, the merchant point of sale device 130 operator 102 totals the items of the user 101 for purchase. In an example, in which the user 101 ordered one or more items at the merchant drive-through location, the merchant POS device 130 operator 102 received the user 101 order that the user 101 submitted at the order window or microphone and actuates one or more objects on the user interface of the merchant POS device 130 to enter the items ordered by the user 101 and total the items. In another example, the merchant POS device operator 102 scans barcodes attached to the one or more items or otherwise enters descriptions and prices associated with the one or more items into the merchant POS device 130. In an example, after scanning or manually entering the items into the merchant POS device 130, the merchant POS device operator 102 actuates an object on the user interface 135 of the merchant POS device 130 to order the merchant POS device 130 to total the items. In an example, the merchant POS device 130 displays, via the user interface 135, the total to the user 101. In another example, the merchant POS device 130 displays, via the user interface 135, the total to the merchant POS device operator 102 and the operator 102 informs the user 101 of the total.

In block 730, the merchant point of sale device 130 operator asks the user 101 to select a payment option. In an example, the merchant POS device 130 displays one or more payment options that the user 101 may select to use in a transaction. Example payment options may comprise payment via a payment application 113 associated with the payment processing system 160, payment by cash, payment by check, payment by credit card, payment by debit card, and/or any other means of payment that the merchant system can or is willing to accept for payment from the user 101. In an example, the one or more payment options are displayed as objects on the user interface 135 and are selectable by the merchant POS device operator 102 in response to the user 101 directing the merchant POS device 102 operator to make a selection.

In block 740, the user 101 directs the merchant point of sale device operator 102 to initiate a transaction with the payment application 113. In an example, in response to receiving a verbal request from the user 101 to select the payment application 113 as a payment option, the merchant POS device operator 102 actuates an object on the user interface 135 of the merchant POS device 130 corresponding to the payment application 113 payment option.

In block 750, the merchant point of sale device operator 102 selects an option on the merchant point of sale device 130 to initiate a transaction using the payment application 113. In an example, the merchant POS device 130 displays a confirmation screen after the merchant POS device operator 102 selects an option to initiate a transaction using the payment application 113. An example confirmation screen may display information summarizing the potential transaction and comprising one or more of a transaction total, a description of the one or more items being purchased by the user 101, and a indication that the user 101 selected the payment application 113 as the method of payment for the transaction. An example confirmation screen may further display options to confirm the transaction or cancel the transaction. In an example, the user 101 reviews the confirmation screen, determines that the information displayed on the confirmation screen is correct, determines to continue with the transaction, and directs the merchant POS device operator 102 to select the option to confirm the transaction via the user interface 135.

In another example, the user 101 decides to abandon the transaction because the information is incorrect or because the user 101 changed his mind and decided not to purchase the items. In yet another example, the confirmation screen further comprises an option to edit the transaction details. In this example, the merchant POS device operator 102, upon direction of the user 101, may select the option to edit the transaction details and may then edit, add, or delete one or more of the items in the transaction or edit payment details or payment methods for the transaction.

In block 760, the merchant POS device 130 displays the user 101 account identity associated with the user computing device 110 that sent a next in line status message. In an example, the merchant POS device 130 displays the user 101 name associated with the user 101 account, the user 101 account identifier, a user 101 photograph associated with the account, or other relevant data associated with the user 101 account that the merchant POS device 130 operator 102 could use to identify the user 101. In another example, the merchant POS device 130 does not display the user 101 account identity.

In block 770, the merchant POS device 130 operator 102 confirms the user 101 identity and selects an option to conduct a transaction with the user 101 account. In an example, the merchant POS device 130 operator 102 compares a displayed image of the user 101 associated with the user 101 account with the user's 101 appearance. In another example, the merchant POS device 130 operator 102 requests an identity document from the user 101 and compares one or more data on the identity document to one or more data displayed on the merchant POS device 130 associated with the user 101 account. In an example, the merchant POS device operator 102 actuates one or more objects on the user interface of the merchant POS device 130 to confirm the user 101 identity and/or to select an option to conduct a transaction with the user 101 account.

In block 780, the merchant POS device 130 transmits the user 101 account identity and a payment account information request to the payment processing system 160. In an example, the user 101 selects payment data to use in a transaction from one or more payment options associated with the user 101 account maintained by the payment processing system 160. In this example, the merchant POS device 130 transmits the user 101 account identity and the payment account information request in response to the merchant POS device 130 receiving a selection of an option on the merchant POS device user interface to conduct a transaction with the user 101 account. In an example, the merchant POS device 130 transmits the user 101 account identity and the payment account information request via the network 140. In another example, however, the user 101 has a single, preconfigured payment option configured for use in transactions and the user 101 does not need to select payment data at the time of transaction. In this example, the merchant POS device 130 does not transmit the payment account information request and only transmits the user 101 account identity to the payment processing system 160 via the network 140. In this example, the merchant POS device 130 transmits the user 101 account identity to the payment processing system 160 in response to the merchant POS device 130 receiving a selection of an option on the merchant POS device 130 user interface to conduct a transaction with the user 101 account. In another example, the merchant POS device 130 previously received payment account information from the payment processing system 160 at a time shortly after receiving the check-in signal or the next in line signal from the user computing device 110. In this other example, the payment account information may comprise one particular payment account option associated with the user 101 account or may comprise two or more payment account options associated with the user 101 account.

In another example, the merchant POS device 130 operator does not ask the user 101 to select payment account information and instead receives payment account information from the payment processing system 160 associated with a particular payment account preconfigured by the user 101 for use in transactions. In this example, the user 101 preconfigures, via the payment application 113, at a time before the transaction at the merchant drive-through location, a particular payment account for use in transactions. In this example, the payment processing system 160 associates the particular payment account with the user 101 account. In this example, in response to receiving a request for payment account information form the merchant POS device 130, the payment processing system 160 determines the particular payment account associated with the user 101 account and transmits information associated with the particular payment account to the merchant POS device 130 over the network 140.

From 780, the method 260 proceeds to block 270 in Figure 2.

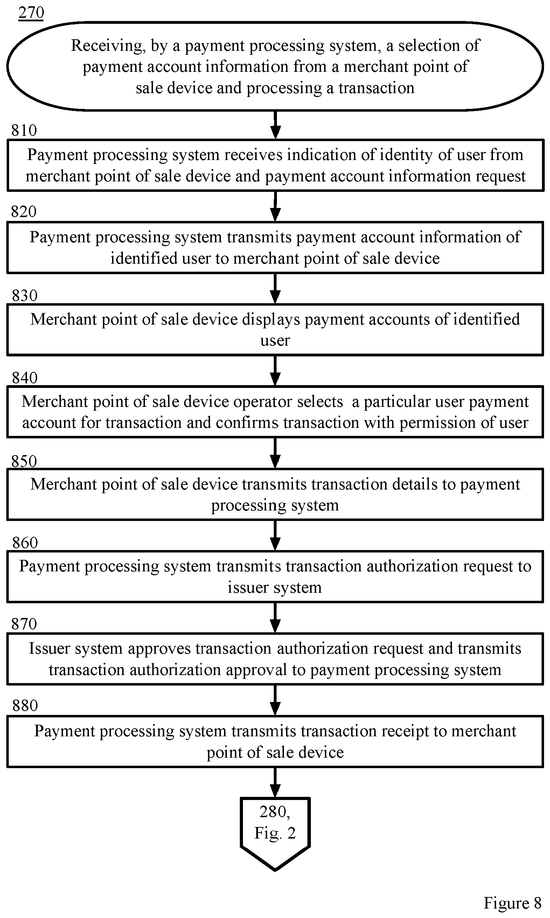

Returning to Figure 2, in block 270, the payment processing system 160 receives transaction information and selection of payment account information from merchant POS device 130 and processes a transaction. The method of receiving, by a payment processing system 160, a selection of payment account information from a merchant POS device 130 and processing a transaction is described in more detail hereinafter with reference to the method 270 described in Figure 8.

Figure 8 is a block diagram depicting a method 270 for receiving, by a payment processing system 160, a selection of payment account information from a merchant POS device 130 and processing a transaction. The method 270 is described with reference to the components illustrated in Figure 1. In certain other examples, however, the payment processing system 160 only requires an approval of the transaction and not a selection of a particular payment option via the merchant POS device 130 because the user 101 account is preconfigured to use a particular payment account with transactions.

In block 810, the payment processing system 160 receives the indication of the identity of the user 101 from the merchant POS device 130 and the payment account information request. For example the payment processing system 160 receives, via the network 140, the user 101 account identifier and the payment account information request.

In block 820, the payment processing system 160 transmits account information of the identified user 101 to the merchant point of sale device 130. In an example, the payment processing system 160 identifies the user 101 account associated with the current transaction based on the user 101 account identifier received from the merchant POS device 130. For example, the user 101 account with the payment processing system 160 comprises payment account information associated with one or more payment accounts of the user 101. An example payment account of the user 101 comprises a credit account, bank account, stored value account, gift card, merchant system charge account, or other relevant user 101 account. In an example, the merchant POS device 130 does not receive complete payment information for one or more of the user 101 payment accounts. For example, the payment information may be obfuscated or truncated. For example, the merchant POS device 130 may only receive abbreviated payment information sufficient for a user 101 to identify a payment account via the user interface 135. In another example, the payment processing system 160 transmits account information for a particular payment account associated with the user 101 account preconfigured for use in transactions and does not transmit information associated with all payment accounts associated with the user 101 account.

In block 830, the merchant POS device 130 displays accounts of the identified user 101. In an example, the merchant POS device 130 does not display complete account information of the user 101 on the user interface 135. For example, for a credit card account, the merchant POS device user interface 135 may display only the name associated with the credit card, last four digits of the credit card number, and the expiration date.

In block 840, the merchant POS device operator 102 selects a user 101 payment account for transaction and confirms the transaction with permission of the user 101. For example, the user 101 views the account options directly displayed on the user interface 135 or listens to the merchant POS device operator 102 read the user 101 payment account options to the user 101. In an example, the user 101 selects a payment account option to use in the transaction. For example, the user 101 decides to use a credit card account. In an example, the user 101 communicates a selection of a payment account for use in the transaction to the merchant POS device operator 102. In an example, in response to receiving the user's 101 indication of the payment account, the merchant POS device operator 102 selects the payment account indicated by the user 101 on the merchant POS device user interface 135. In an example where one particular payment account is already preconfigured by the user 101 for use in transactions, the merchant POS device operator 102 does not select a user 101 payment account for the transaction and only selects an option via the user interface of the merchant POS device 130 to confirm the transaction. In another example, instead of selecting a user 101 payment account, the user 101 confirms use of the particular user 101 payment account preconfigured for use in transactions.

In block 850, the merchant POS device 130 transmits transaction details to the payment processing system 160. For example, the merchant POS device 130 transmits transaction details comprising a transaction total, an account identifier of the merchant system, and the selection of the user 101 account payment option or confirmation of use of the particular payment account preconfigured for use in transactions. In an example, the payment processing system 160 receives the transaction details over the network 140. In an example, the payment processing system 160 extracts payment account information from the user 101 account corresponding to the received selection of the user 101 payment account.

In block 860, the payment processing system 160 transmits a transaction authorization request to an issuer system 150. In an example, the payment processing system 160 generates a transaction authorization request comprising user 101 payment account information, merchant system payment account information, and a total amount of the transaction. In an example, the issuer system 150 receives the transaction authorization request from the payment processing system 160 via the network 140.

In block 870, the issuer system 150 approves the transaction authorization request and transmits a transaction authorization approval to the payment processing system 160. In an example, the issuer system 150 subtracts the user's 101 current account balance from the user's 101 credit limit associated with the user's 101 credit account. In an example, if the different between the credit limit and the credit balance is a positive number greater than the total amount of the transaction, the issuer system 150 approves the transaction authorization. For example, the user 101 will not exceed his credit limit if the transaction were to be approved, therefore the issuer system 150 approves the transaction authorization request. In an example, the payment processing system 160 receives the transaction authorization approval from the issuer system 150. In another example, the payment processing system 160 receives a denial of the transaction authorization request in response to the issuer system 150 declining the transaction authorization request. In an example, if the issuer system 150 approves the transaction authorization request, the issuer system 150 credits the merchant system account and adds a charge to the user 101 credit account statement, bank account statement, or other appropriate statement.

In block 880, the payment processing system 160 transmits a transaction receipt to the merchant point of sale device 130. For example, the payment processing system 160 transmits a confirmation of the approval of the transaction or a notice of a declined transaction to the merchant POS device 130 over the network 140. In an example, the merchant POS device 130 prints a receipt comprising a summary of a successful or unsuccessful transaction via a printer device that is a component of or otherwise communicatively coupled to the merchant POS device 130. In another example, the payment processing system 160 may transmit a transaction receipt to the user computing device 110 to be displayed on the user computing device. In yet another example, the merchant POS device 130 transmits a transaction receipt to the user computing device 110 to be displayed on the user computing device.

From block 880, the method 270 proceeds to block 280 in Figure 2.

Returning to Figure 2, in block 280, the merchant POS device operator provides goods or services to user 101 at the drive-through window. For example, if the merchant location is a drive-through restaurant, a ticket counter, or a grocery store checkout, the merchant POS device operator 102 provides the user 101 with the ordered items through the drive-through window, the tickets at the ticket counter, or the user's 101 bagged groceries at the grocery store checkout, respectively. In an example, the merchant POS device 130 prints a receipt describing the transaction and the merchant POS device operator 102 provides the receipt to the user 101.

### Other Examples

Figure 9 depicts a computing machine 2000 and a module 2050 in accordance with certain examples. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a vehicular information system, one or more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, coprocessors, or any combination thereof. According to certain embodiments, the processor 2010 along with other components of the computing machine 2000 may be a virtualized computing machine executing within one or more other computing machines.

The system memory 2030 may include non-volatile memories such as read-only memory ("ROM"), programmable read-only memory ("PROM"), erasable programmable read-only memory ("EPROM"), flash memory, or any other device capable of storing program instructions or data with or without applied power. The system memory 2030 may also include volatile memories such as random access memory ("RAM"), static random access memory ("SRAM"), dynamic random access memory ("DRAM"), and synchronous dynamic random access memory ("SDRAM"). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory ("CD-ROM"), a digital versatile disc ("DVD"), a Blu-ray disc, a magnetic tape, a flash memory, other non-volatile memory device, a solid state drive ("SSD"), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output ("I/O") interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface ("SCSI"), serial-attached SCSI ("SAS"), fiber channel, peripheral component interconnect ("PCI"), PCI express (PCIe), serial bus, parallel bus, advanced technology attached ("ATA"), serial ATA ("SATA"), universal serial bus ("USB"), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. The network 2080 may be packet switched, circuit switched, of any topology, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to some embodiments, any of the processor 2010, the other elements of the computing machine 2000, or the various peripherals discussed herein may be integrated into a single device such as a system on chip ("SOC"), system on package ("SOP"), or ASIC device.

In situations in which the systems discussed here collect personal information about users, or may make use of personal information, the users may be provided with an opportunity or option to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

Embodiments may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing embodiments in computer programming, and the embodiments should not be construed as limited to any one set of computer program instructions. Further, a skilled programmer would be able to write such a computer program to implement an embodiment of the disclosed embodiments based on the appended flow charts and associated description in the application text. Therefore, disclosure of a particular set of program code instructions is not considered necessary for an adequate understanding of how to make and use embodiments. Further, those skilled in the art will appreciate that one or more aspects of embodiments described herein may be performed by hardware, software, or a combination thereof, as may be embodied in one or more computing systems. Moreover, any reference to an act being performed by a computer should not be construed as being performed by a single computer as more than one computer may perform the act.

The examples described herein can be used with computer hardware and software that perform the methods and processing functions described herein. The systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays (FPGA), etc.

## Claims

1. A computer-implemented method to identify user computing device locations based on location data and beacon signal strength, comprising:
receiving, by a user computing device (110) having a first location, a geofence boundary associated with a particular location, a location of a beacon device (120) at the particular location, and a beacon device identifier associated with the beacon device (120);
determining, by the user computing device (110), that the first location of the user computing device (110) is located within the geofence boundary;
in response to determining that the user computing device (110) is located within the geofence boundary, transitioning, by the user computing device (110), from an inactive state, in which a wireless network scan is performed by scanning, by the user computing device (110), for wireless signals over a wireless network (140) at regular intervals with a first duration between scans, to a semi-active state, in which the wireless network scan is performed by scanning, by the user computing device (110), for wireless signals over the wireless network (140) at regular intervals with a second duration between scans, the second duration being shorter than the first duration;
receiving, by the user computing device (110), a beacon signal comprising the beacon device identifier from the beacon device (120) via the wireless network scan;
determining, by the user computing device (110), that a second location of the user computing device (110) is within the geofence boundary and is less than a predefined distance from the location of the beacon device (120) based on a beacon signal strength of the beacon device (120) the beacon signal strength being based on at least one of the received beacon signal and further signals received from the beacon device (120) via the wireless network scan;
responsive to determining that the second location of the user computing device is within the geofence boundary and is less than a predefined distance from the location of the beacon device, transitioning, by the user computer device (110), from the semi-active state to an active state in which the user computing device (110) scans for wireless signals over the wireless network (140) at regular intervals with a third duration between scans, wherein the third duration is shorter than the second duration; and
in response to determining that the second location is less than the predefined distance from the location of the beacon device (120), transmitting, by the user computing device (110), a next in line status message indicating the location of the user computer device (110) and a user identifier associated with the user computing device (110) to a computing device (130) associated with the beacon device (120).

2. The method of claim 1, wherein the computing device (130) associated with the beacon device (120) is operable to process a request based on information associated with an account of a user (101) identified by the user identifier.

3. The method of claim 1 or 2, wherein the computing device (130) associated with the beacon device (120) transmits a request to a processor computing system (160) for an information associated with the user identifier and receives the information associated with the user identifier from the processor computing system (160).

4. The method of claim 1, 2 or 3, further comprising:
determining, by the user computing device (110), the beacon signal strength of the beacon device (120); and
determining that the beacon device signal strength is greater than a predefined signal strength, wherein transmitting the next in line status message and the user identifier associated with the user computing device (110) to the computing device (130) associated with the beacon device (120) is further in response to determining that the beacon device signal strength is greater than the predefined signal strength.

5. The method of one of the preceding claims, further comprising:
processing, by the computing device (130) associated with the beacon device (120), a request based on information associated with the user identifier,
wherein the information associated with the user identifier comprises payment account information, and
wherein the processing request comprises a request to process a transaction using the payment account information.

6. The method of one of the preceding claims, wherein the beacon device (120) is located in proximity to a drive-through window at the particular location.

7. The method of one of the preceding claims, wherein, for determining that a second location of the user computing device (110) is within the geofence boundary and is less than a predefined distance from the location of the beacon device (120), the user computing device (110) monitors the location of the user computing device (110) and the beacon signal strength.

8. A computer program product, comprising:
a non-transitory computer-readable medium having computer-executable program instructions embodied thereon that when executed by a computer cause the computer to identify user computing device locations based on location data and beacon signal strength, the computer-executable program instructions comprising:
computer-executable program instructions to receive a geofence boundary associated with a particular location, a location of a beacon device (120) at the particular location, and a beacon device identifier associated with the beacon device (120);
computer-executable program instructions to determine that a first location of a user computing device (110) is located within the geofence boundary;
computer-executable program instructions to, in response to determining that the user computing device (110) is located within the geofence boundary, transition from an inactive state, in which a wireless network scan is performed by scanning, by the user computing device (110), for wireless signals over a wireless network (140) at regular intervals with a first duration between scans, to a semi-active state, in which the wireless network scan is performed by scanning for wireless signals over the wireless network (140) at regular intervals with a second duration between scans, the second duration being shorter than the first duration;
computer-executable program instructions to receive a beacon signal comprising the beacon device identifier from the beacon device (120) via the wireless network scan;
computer-executable program instructions to determine that a second location of the user computing device (110) is within the geofence boundary and is less than a predefined distance from the location of the beacon device (120) based on a beacon signal strength of the beacon device (120) the beacon signal strength being based on at least one of the received beacon signal and further signals received from the beacon device (120) via the wireless network scan;
computer-executable instructions to, responsive to determining that the second location of the user computing device is within the geofence boundary and is less than a predefined distance from the location of the beacon device, transition from the semi-active state to an active state in which the user computing device (110) scans for wireless signals over the wireless network (140) at regular intervals with a third duration between scans, wherein the third duration is shorter than the second duration; and
computer-executable program instructions to, in response to determining that the second location is less than the predefined distance from the location of the beacon device, transmit a next in line status message indicating the location of the user computer device (110) and a user identifier associated with the user computing device (110) to a computing device (130) associated with the beacon device (120).

9. The computer program of claim 8, wherein the particular location comprises a drive-through window at the service provider location.

10. A user computing device, comprising:
a storage device; and
a processor communicatively coupled to the storage device, wherein the processor executes application code instructions that are stored in the storage device to cause the user computing device, wherein the user computing device has a first location, (110) to:
receive a geofence boundary associated with a particular location, a location of a beacon device (120) at the particular location, and a beacon device identifier associated with the beacon device (120);
determine that the first location of the user computing device (110) is located within the geofence boundary;
in response to determining that the user computing device (110) is located within the geofence boundary, transition from an inactive state, in which a wireless network scan is performed by scanning, by the user computing device (110), for wireless signals over a wireless network (140) at regular intervals with a first duration between scans, to a semi-active state, in which the wireless network scan is performed by scanning for wireless signals over the wireless network (140) at regular intervals with a second duration between scans, the second duration being shorter than the first duration;
receive a beacon signal comprising the beacon device identifier from the beacon device (120) via the wireless network scan;
determine that a second location of the user computing device (110) is within the geofence boundary and is less than a predefined distance from the location of the beacon device (120) based on a beacon signal strength of the beacon device (120) the beacon signal strength being based on at least one of the received beacon signal and further signals received from the beacon device (120) via the wireless network scan;
responsive to determining that the second location of the user computing device is within the geofence boundary and is less than a predefined distance from the location of the beacon device, transitioning, by the user computer device (110), from the semi-active state to an active state in which the user computing device (110) scans for wireless signals over the wireless network (140) at regular intervals with a third duration between scans, wherein the third duration is shorter than the second duration; and
in response to determining that the second location is less than the predefined distance from the location of the beacon device (120), transmit a next in line status message indicating the location of the user computer device (110) and a user identifier associated with the user computing device (110) to a computing device (130) associated with the beacon device (120).

## Patentansprüche

1. Computerimplementiertes Verfahren zum Identifizieren von Standorten von Benutzerdatenverarbeitungsvorrichtungen basierend auf Standortdaten und einer Beacon-Signalstärke, umfassend:
Empfangen, durch eine Benutzerdatenverarbeitungsvorrichtung (110), die einen ersten Standort aufweist, einer Geofence-Grenze, die einem bestimmten Standort zugeordnet ist, eines Standorts einer Beacon-Vorrichtung (120) an dem bestimmten Standort und einer Beacon-Vorrichtungskennung, die der Beacon-Vorrichtung (120) zugeordnet ist;
Bestimmen, durch die Benutzerdatenverarbeitungsvorrichtung (110), dass sich der erste Standort der Benutzerdatenverarbeitungsvorrichtung (110) innerhalb der Geofence-Grenze befindet;
als Reaktion auf das Bestimmen, dass sich die Benutzerdatenverarbeitungsvorrichtung (110) innerhalb der Geofence-Grenze befindet, Übergehen der Benutzerdatenverarbeitungsvorrichtung (110) von einem inaktiven Zustand, in dem ein Drahtlosnetzwerkscan durch Scannen, durch die Benutzerdatenverarbeitungsvorrichtung (110), in regelmäßigen Abständen mit einer ersten Dauer zwischen den Scans nach Drahtlossignalen über ein Drahtlosnetzwerk (140) durchgeführt wird, in einen halbaktiven Zustand, in dem der Drahtlosnetzwerkscan durch Scannen, durch die Benutzerdatenverarbeitungsvorrichtung (110), in regelmäßigen Abständen mit einer zweiten Dauer zwischen den Scans nach Drahtlossignalen über das Drahtlosnetzwerk (140) durchgeführt wird, wobei die zweite Dauer kürzer ist als die erste Dauer;
Empfangen, durch die Benutzerdatenverarbeitungsvorrichtung (110), eines Beacon-Signals, das die Beacon-Vorrichtungskennung umfasst, von der Beacon-Vorrichtung (120) über den Drahtlosnetzwerkscan;
Bestimmen, durch die Benutzerdatenverarbeitungsvorrichtung (110), dass sich ein zweiter Standort der Benutzerdatenverarbeitungsvorrichtung (110) innerhalb der Geofence-Grenze befindet und weniger als eine vordefinierte Entfernung von dem Standort der Beacon-Vorrichtung (120) entfernt ist, basierend auf einer Beacon-Signalstärke der Beacon-Vorrichtung (120), wobei die Beacon-Signalstärke auf mindestens einem der empfangenen Beacon-Signale und weiteren Signalen basiert, die von der Beacon-Vorrichtung (120) über den Drahtlosnetzwerkscan empfangen wurden;
als Reaktion auf das Bestimmen, dass sich der zweite Standort der Benutzerdatenverarbeitungsvorrichtung innerhalb der Geofence-Grenze befindet und weniger als eine vordefinierte Entfernung von dem Standort der Beacon-Vorrichtung entfernt ist, Übergehen der Benutzerdatenverarbeitungsvorrichtung (110) von dem halbaktiven Zustand in einen aktiven Zustand, in dem die Benutzerdatenverarbeitungsvorrichtung (110) in regelmäßigen Abständen mit einer dritten Dauer zwischen den Scans nach Drahtlossignalen über das Netzwerk (140) scannt, wobei die dritte Dauer kürzer ist als die zweite Dauer; und
als Reaktion auf das Bestimmen, dass der zweite Standort weniger als die vordefinierte Entfernung von dem Standort der Beacon-Vorrichtung (120) entfernt ist, Senden, durch die Benutzerdatenverarbeitungsvorrichtung (110), einer nächsten Statusmeldung, die den Standort der Benutzerdatenverarbeitungsvorrichtung (110) und eine Benutzerkennung, die der Benutzerdatenverarbeitungsvorrichtung (110) zugeordnet ist, angibt, an eine Datenverarbeitungsvorrichtung (130), die der Beacon-Vorrichtung (120) zugeordnet ist.

2. Verfahren nach Anspruch 1, wobei die Datenverarbeitungsvorrichtung (130), die der Beacon-Vorrichtung (120) zugeordnet ist, betreibbar ist, eine Anfrage basierend auf Informationen zu verarbeiten, die einem Konto eines Benutzers (101) zugeordnet sind, der durch die Benutzerkennung identifiziert wird.

3. Verfahren nach Anspruch 1 oder 2, wobei die Datenverarbeitungsvorrichtung (130), die der Beacon-Vorrichtung (120) zugeordnet ist, an ein Prozessor-Datenverarbeitungssystem (160) eine Anfrage nach Informationen sendet, die der Benutzerkennung zugeordnet sind, und die Informationen, die der Benutzerkennung zugeordnet sind, von dem Prozessor-Datenverarbeitungssystem (160) empfängt.

4. Verfahren nach Anspruch 1, 2 oder 3, ferner umfassend:
Bestimmen, durch die Benutzerdatenverarbeitungsvorrichtung (110), der Beacon-Signalstärke der Beacon-Vorrichtung (120); und Bestimmen, dass die Signalstärke der Beacon-Vorrichtung größer ist als eine vordefinierte Signalstärke, wobei das Senden der nächsten Statusmeldung und der Benutzerkennung, die der Benutzerdatenverarbeitungsvorrichtung (110) zugeordnet ist, an die Datenverarbeitungsvorrichtung (130), die der Beacon-Vorrichtung (120) zugeordnet ist, ferner als weitere Reaktion auf das Bestimmen erfolgt, dass die Signalstärke der Beacon-Vorrichtung größer ist als die vordefinierte Signalstärke.

5. Verfahren nach einem der vorhergehenden Ansprüche, ferner umfassend:
Verarbeiten, durch die Datenverarbeitungsvorrichtung (130), die der Beacon-Vorrichtung (120) zugeordnet ist, einer Anfrage basierend auf Informationen, die der Benutzerkennung zugeordnet sind,
wobei die Informationen, die der Benutzerkennung zugeordnet sind, Zahlungskontoinformationen umfassen, und
wobei die Verarbeitungsanfrage eine Anfrage zum Verarbeiten einer Transaktion unter Verwendung der Zahlungskontoinformationen umfasst.

6. Verfahren nach einem der vorhergehenden Ansprüche, wobei sich die Beacon-Vorrichtung (120) in der Nähe eines Vorbeifahrfensters an dem bestimmten Ort befindet.

7. Verfahren nach einem der vorhergehenden Ansprüche, wobei zum Bestimmen, dass sich ein zweiter Standort der Benutzerdatenverarbeitungsvorrichtung (110) innerhalb der Geofence-Grenze befindet und weniger als eine vordefinierte Entfernung von dem Standort der Beacon-Vorrichtung (120) entfernt ist, die Benutzerdatenverarbeitungsvorrichtung (110) den Standort der Benutzerdatenverarbeitungsvorrichtung (110) und die Beacon-Signalstärke überwacht.

8. Computerprogrammprodukt, umfassend:
ein nichtflüchtiges computerlesbares Medium mit darauf befindlichen computerausführbaren Programmanweisungen, die, wenn sie durch einen Computer ausgeführt werden, den Computer veranlassen, Standorte von Benutzerdatenverarbeitungsvorrichtungen basierend auf Standortdaten und einer Beacon-Signalstärke zu identifizieren, wobei die computerausführbaren Programmanweisungen umfassen:
computerausführbare Programmanweisungen zum Empfangen einer Geofence-Grenze, die einem bestimmten Standort zugeordnet ist, eines Standorts einer Beacon-Vorrichtung (120) an dem bestimmten Standort und einer Beacon-Vorrichtungskennung, die der Beacon-Vorrichtung (120) zugeordnet ist;
computerausführbare Programmanweisungen zum Bestimmen, ob sich ein erster Standort einer Benutzerdatenverarbeitungsvorrichtung (110) innerhalb der Geofence-Grenze befindet;
computerausführbare Programmanweisungen zum Übergehen als Reaktion auf das Bestimmen, dass sich die Benutzerdatenverarbeitungsvorrichtung (110) innerhalb der Geofence-Grenze befindet, von einem inaktiven Zustand, in dem ein Drahtlosnetzwerkscan durch Scannen, durch die Benutzerdatenverarbeitungsvorrichtung (110), in regelmäßigen Abständen mit einer ersten Dauer zwischen den Scans nach Drahtlossignalen über ein Drahtlosnetzwerk (140) durchgeführt wird, in einen halbaktiven Zustand, in dem der Drahtlosnetzwerkscan durch Scannen in regelmäßigen Abständen mit einer zweiten Dauer zwischen den Scans nach Drahtlossignalen über das Drahtlosnetzwerk (140) durchgeführt wird, wobei die zweite Dauer kürzer ist als die erste Dauer;
computerlesbare Programmanweisungen zum Empfangen eines Beacon-Signals, das die Beacon-Vorrichtungskennung umfasst, von der Beacon-Vorrichtung (120) über den Drahtlosnetzwerkscan;
computerlesbare Programmanweisungen zum Bestimmen, dass sich ein zweiter Standort der Benutzerdatenverarbeitungsvorrichtung (110) innerhalb der Geofence-Grenze befindet und weniger als eine vordefinierte Entfernung von dem Standort der Beacon-Vorrichtung (120) entfernt ist, basierend auf einer Beacon-Signalstärke der Beacon-Vorrichtung (120), wobei die Beacon-Signalstärke auf mindestens einem der empfangenen Beacon-Signale und weiteren Signalen basiert, die von der Beacon-Vorrichtung (120) über den Drahtlosnetzwerkscan empfangen wurden;
computerlesbare Programmanweisungen zum Übergehen als Reaktion auf das Bestimmen, dass sich der zweite Standort der Benutzerdatenverarbeitungsvorrichtung innerhalb der Geofence-Grenze befindet und weniger als eine vordefinierte Entfernung von dem Standort der Beacon-Vorrichtung entfernt ist, von dem halbaktiven Zustand in einen aktiven Zustand, in dem die Benutzerdatenverarbeitungsvorrichtung (110) in regelmäßigen Abständen mit einer dritten Dauer zwischen den Scans nach Drahtlossignalen über das Drahtlosnetzwerk (140) scannt, wobei die dritte Dauer kürzer als die zweite Dauer ist; und
computerlesbare Programmanweisungen zum Senden als Reaktion auf das Bestimmen, dass der zweite Standort weniger als die vordefinierte Entfernung von dem Standort der Beacon-Vorrichtung entfernt ist, einer nächsten Statusmeldung, die den Standort der Benutzerdatenverarbeitungsvorrichtung (110) und eine Benutzerkennung, die der Benutzerdatenverarbeitungsvorrichtung (110) zugeordnet ist, angibt, an eine Datenverarbeitungsvorrichtung (130), die der Beacon-Vorrichtung (120) zugeordnet ist.

9. Computerprogramm nach Anspruch 8, wobei der bestimmte Standort ein Vorbeifahrfenster an dem Dienstanbieterstandort umfasst.

10. Benutzerdatenverarbeitungsvorrichtung, umfassend:
eine Speichervorrichtung; und
einen Prozessor, der kommunikativ mit der Speichervorrichtung gekoppelt ist, wobei der Prozessor Anwendungscodeanweisungen ausführt, die in der Speichervorrichtung gespeichert sind, um die Benutzerdatenverarbeitungsvorrichtung zu Folgendem zu veranlassen, wobei die Benutzerdatenverarbeitungsvorrichtung (110) einen ersten Standort aufweist:
Empfangen einer Geofence-Grenze, die einem bestimmten Standort zugeordnet ist, eines Standorts einer Beacon-Vorrichtung (120) an dem bestimmten Standort und einer Beacon-Vorrichtungskennung, die der Beacon-Vorrichtung (120) zugeordnet ist;
Bestimmen, dass sich der erste Standort der Benutzerdatenverarbeitungsvorrichtung (110) innerhalb der Geofence-Grenze befindet;
als Reaktion auf das Bestimmen, dass sich die Benutzerdatenverarbeitungsvorrichtung (110) innerhalb der Geofence-Grenze befindet, Übergehen von einem inaktiven Zustand, in dem ein Drahtlosnetzwerkscan durch Scannen, durch die Benutzerdatenverarbeitungsvorrichtung (110), in regelmäßigen Abständen mit einer ersten Dauer zwischen den Scans nach Drahtlossignalen über ein Drahtlosnetzwerk (140) durchgeführt wird, in einen halbaktiven Zustand, in dem der Drahtlosnetzwerkscan durch Scannen in regelmäßigen Abständen mit einer zweiten Dauer zwischen den Scans nach Drahtlossignalen über das Drahtlosnetzwerk (140) durchgeführt wird, wobei die zweite Dauer kürzer ist als die erste Dauer;
Empfangen eines Beacon-Signals, das die Beacon-Vorrichtungskennung umfasst, von der Beacon-Vorrichtung (120) über den Drahtlosnetzwerkscan;
Bestimmen, dass sich ein zweiter Standort der Benutzerdatenverarbeitungsvorrichtung (110) innerhalb der Geofence-Grenze befindet und weniger als eine vordefinierte Entfernung von dem Standort der Beacon-Vorrichtung (120) entfernt ist, basierend auf einer Beacon-Signalstärke der Beacon-Vorrichtung (120), wobei die Beacon-Signalstärke auf mindestens einem der empfangenen Beacon-Signale und weiteren Signalen basiert, die von der Beacon-Vorrichtung (120) über den Drahtlosnetzwerkscan empfangen wurden;
als Reaktion auf das Bestimmen, dass sich der zweite Standort der Benutzerdatenverarbeitungsvorrichtung innerhalb der Geofence-Grenze befindet und weniger als eine vordefinierte Entfernung von dem Standort der Beacon-Vorrichtung entfernt ist, Übergehen der Benutzerdatenverarbeitungsvorrichtung (110) von dem halbaktiven Zustand in einen aktiven Zustand, in dem die Benutzerdatenverarbeitungsvorrichtung (110) in regelmäßigen Abständen mit einer dritten Dauer zwischen den Scans nach Drahtlossignalen über das Netzwerk (140) scannt, wobei die dritte Dauer kürzer ist als die zweite Dauer; und
als Reaktion auf das Bestimmen, dass der zweite Standort weniger als die vordefinierte Entfernung von dem Standort der Beacon-Vorrichtung (120) entfernt ist, Senden einer nächsten Statusmeldung, die den Standort der Benutzerdatenverarbeitungsvorrichtung (110) und eine Benutzerkennung, die der Benutzerdatenverarbeitungsvorrichtung (110) zugeordnet ist, angibt, an eine Datenverarbeitungsvorrichtung (130), die der Beacon-Vorrichtung (120) zugeordnet ist.

## Revendications

1. Procédé mis en œuvre par ordinateur pour identifier des emplacements de dispositif informatique utilisateur sur la base de données d'emplacement et d'une puissance du signal de balise, comprenant :
la réception, par un dispositif informatique utilisateur (110) ayant un premier emplacement, une limite de géorepérage associée à un emplacement particulier, un emplacement d'un dispositif de balise (120) à l'emplacement particulier, et un identifiant de dispositif de balise associé au dispositif de balise (120) ;
la détermination, par le dispositif informatique utilisateur (110), que le premier emplacement du dispositif informatique utilisateur (110) est situé à l'intérieur de la limite de géorepérage ;
en réponse à la détermination que le dispositif informatique utilisateur (110) est situé à l'intérieur de la limite de géorepérage, le passage, par le dispositif informatique utilisateur (110), d'un état inactif, dans lequel une analyse du réseau sans fil est réalisée en recherchant, par le dispositif informatique utilisateur (110), des signaux sans fil sur un réseau sans fil (140) à intervalles réguliers avec une première durée entre les analyses, à un état semi-actif, dans lequel l'analyse du réseau sans fil est réalisée en recherchant, par le dispositif informatique utilisateur (110), des signaux sans fil sur le réseau sans fil (140) à intervalles réguliers avec une deuxième durée entre les analyses, la deuxième durée étant plus courte que la première durée ;
la réception, par le dispositif informatique utilisateur (110), d'un signal de balise comprenant l'identifiant de dispositif de balise provenant du dispositif de balise (120) via l'analyse du réseau sans fil ;
la détermination, par le dispositif informatique utilisateur (110), qu'un second emplacement du dispositif informatique utilisateur (110) se trouve à l'intérieur de la limite de géorepérage et est à moins d'une distance prédéfinie de l'emplacement du dispositif de balise (120) sur la base d'une puissance du signal de balise du dispositif de balise (120) la puissance du signal de balise étant basée sur au moins l'un du signal de balise reçu et d'autres signaux reçus du dispositif de balise (120) via l'analyse du réseau sans fil ;
en réponse à la détermination que le second emplacement du dispositif informatique utilisateur se trouve à l'intérieur de la limite de géorepérage et à moins d'une distance prédéfinie de l'emplacement du dispositif de balise, le passage, par le dispositif informatique utilisateur (110), de l'état semi-actif à un état actif dans lequel le dispositif informatique utilisateur (110) recherche des signaux sans fil sur le réseau sans fil (140) à intervalles réguliers avec une troisième durée entre les analyses, dans lequel la troisième durée est plus courte que la deuxième durée ; et
en réponse à la détermination que le second emplacement est à moins de la distance prédéfinie de l'emplacement du dispositif de balise (120), la transmission, par le dispositif informatique utilisateur (110), d'un message d'état suivant indiquant l'emplacement du dispositif informatique utilisateur (110) et d'un identifiant utilisateur associé au dispositif informatique utilisateur (110) à un dispositif informatique (130) associé au dispositif de balise (120).

2. Procédé selon la revendication 1, dans lequel le dispositif informatique (130) associé au dispositif de balise (120) est capable de traiter une requête basée sur des informations associées à un compte d'un utilisateur (101) identifié par l'identifiant utilisateur.

3. Procédé selon la revendication 1 ou 2, dans lequel le dispositif informatique (130) associé au dispositif de balise (120) transmet une requête à un système informatique de traitement (160) pour des informations associées à l'identifiant utilisateur et reçoit les informations associées à l'identifiant utilisateur du système informatique de traitement (160).

4. Procédé selon la revendication 1, 2 ou 3, comprenant également :
la détermination, par le dispositif informatique utilisateur (110), de la puissance du signal de balise du dispositif de balise (120) ; et
la détermination que la puissance du signal du dispositif de balise est supérieure à une puissance du signal prédéfinie, dans lequel la transmission du message d'état suivant et de l'identifiant utilisateur associé au dispositif informatique utilisateur (110) au dispositif informatique (130) associé au dispositif de balise (120) est également en réponse à la détermination que la puissance du signal du dispositif de balise est supérieure à la puissance du signal prédéfinie.

5. Procédé selon l'une des revendications précédentes, comprenant également :
le traitement, par le dispositif informatique (130) associé au dispositif de balise (120), d'une requête basée sur des informations associées à l'identifiant utilisateur,
dans lequel les informations associées à l'identifiant utilisateur comprennent des informations de compte de paiement, et
dans lequel la requête de traitement comprend une requête de traitement d'une transaction à l'aide des informations de compte de paiement.

6. Procédé selon l'une des revendications précédentes, dans lequel le dispositif de balise (120) est situé à proximité d'une fenêtre de passage à l'emplacement particulier.

7. Procédé selon l'une des revendications précédentes, dans lequel, pour déterminer qu'un second emplacement du dispositif informatique utilisateur (110) se trouve à l'intérieur de la limite de géorepérage et à moins d'une distance prédéfinie de l'emplacement du dispositif de balise (120), le dispositif informatique utilisateur (110) surveille l'emplacement du dispositif informatique utilisateur (110) et la puissance du signal de balise.

8. Produit de programme informatique, comprenant :
un support non transitoire lisible par ordinateur ayant des instructions de programme exécutables par ordinateur intégrées qui lorsqu'elles sont exécutées par un ordinateur amènent l'ordinateur à identifier des emplacements de dispositif informatique utilisateur sur la base de données d'emplacement et de puissance du signal de balise, les instructions de programme exécutables par ordinateur comprenant :
des instructions de programme exécutables par ordinateur pour recevoir une limite de géorepérage associée à un emplacement particulier, un emplacement d'un dispositif de balise (120) à l'emplacement particulier, et un identifiant de dispositif de balise associé au dispositif de balise (120) ;
des instructions de programme exécutables par ordinateur pour déterminer qu'un premier emplacement d'un dispositif informatique utilisateur (110) est situé à l'intérieur de la limite de géorepérage ;
des instructions de programme exécutables par ordinateur pour, en réponse à la détermination que le dispositif informatique utilisateur (110) est situé à l'intérieur de la limite de géorepérage, passer d'un état inactif, dans lequel une analyse du réseau sans fil est réalisée en recherchant, par le dispositif informatique utilisateur (110), des signaux sans fil sur un réseau sans fil (140) à intervalles réguliers avec une première durée entre les analyses, à un état semi-actif, dans lequel l'analyse du réseau sans fil est réalisée en recherchant des signaux sans fil sur le réseau sans fil (140) à intervalles réguliers avec une deuxième durée entre les analyses, la deuxième durée étant plus courte que la première durée ;
des instructions de programme exécutables par ordinateur pour recevoir un signal de balise comprenant l'identifiant de dispositif de balise provenant du dispositif de balise (120) via l'analyse du réseau sans fil ;
des instructions de programme exécutables par ordinateur pour déterminer qu'un second emplacement du dispositif informatique utilisateur (110) se trouve à l'intérieur de la limite du géorepérage et est à moins d'une distance prédéfinie de l'emplacement du dispositif de balise (120) sur la base d'une puissance du signal de balise du dispositif de balise (120) la puissance du signal de balise étant basée sur au moins l'un du signal de balise reçu et d'autres signaux reçus du dispositif de balise (120) via l'analyse du réseau sans fil ;
des instructions exécutables par ordinateur pour, en réponse à la détermination que le second emplacement du dispositif informatique utilisateur se trouve à l'intérieur de la limite de géorepérage et à moins d'une distance prédéfinie de l'emplacement du dispositif de balise, passer de l'état semi-actif à un état actif dans lequel le dispositif informatique utilisateur (110) recherche des signaux sans fil sur le réseau sans fil (140) à intervalles réguliers avec une troisième durée entre les analyses, dans lequel la troisième durée est plus courte que la deuxième durée ; et
des instructions de programme exécutables par ordinateur pour, en réponse à la détermination que le second emplacement est à moins de la distance prédéfinie de l'emplacement du dispositif de balise, transmettre un message d'état suivant indiquant l'emplacement du dispositif informatique utilisateur (110) et d'un identifiant utilisateur associé au dispositif informatique utilisateur (110) à un dispositif informatique (130) associé au dispositif de balise (120).

9. Programme informatique selon la revendication 8, dans lequel l'emplacement particulier comprend une fenêtre de passage à l'emplacement du fournisseur de services.

10. Dispositif informatique utilisateur, comprenant :
un dispositif de stockage ; et
un processeur couplé en communication au dispositif de stockage, dans lequel le processeur exécute des instructions de code d'application qui sont stockées dans le dispositif de stockage pour amener le dispositif informatique utilisateur, dans lequel le dispositif informatique utilisateur se trouve à un premier emplacement, (110) à :
recevoir une limite de géorepérage associée à un emplacement particulier, un emplacement d'un dispositif de balise (120) à l'emplacement particulier, et un identifiant de dispositif de balise associé au dispositif de balise (120) ;
déterminer que le premier emplacement du dispositif informatique utilisateur (110) est situé à l'intérieur de la limite de géorepérage ;
en réponse à la détermination que le dispositif informatique utilisateur (110) est situé à l'intérieur de la limite de géorepérage, passer d'un état inactif, dans lequel une analyse du réseau sans fil est réalisée en recherchant, par le dispositif informatique utilisateur (110), des signaux sans fil sur un réseau sans fil (140) à intervalles réguliers avec une première durée entre les analyses, à un état semi-actif, dans lequel l'analyse du réseau sans fil est réalisée en recherchant des signaux sans fil sur le réseau sans fil (140) à intervalles réguliers avec une deuxième durée entre les analyses, la deuxième durée étant plus courte que la première durée ;
recevoir un signal de balise comprenant l'identifiant de dispositif de balise provenant du dispositif de balise (120) via l'analyse du réseau sans fil ;
déterminer qu'un second emplacement du dispositif informatique utilisateur (110) se trouve à l'intérieur de la limite de géorepérage et est à moins d'une distance prédéfinie de l'emplacement du dispositif de balise (120) sur la base d'une puissance du signal de balise du dispositif de balise (120) la puissance du signal de balise étant basée sur au moins l'un du signal de balise reçu et d'autres signaux reçus du dispositif de balise (120) via l'analyse du réseau sans fil ;
en réponse à la détermination que le second emplacement du dispositif informatique utilisateur se trouve à l'intérieur de la limite de géorepérage et à moins d'une distance prédéfinie de l'emplacement du dispositif de balise, passer, par le dispositif informatique utilisateur (110), de l'état semi-actif à un état actif dans lequel le dispositif informatique utilisateur (110) recherche des signaux sans fil sur le réseau sans fil (140) à intervalles réguliers avec une troisième durée entre les analyses, dans lequel la troisième durée est plus courte que la deuxième durée ; et
en réponse à la détermination que le second emplacement est à moins de la distance prédéfinie de l'emplacement du dispositif de balise (120), transmettre un message d'état suivant indiquant l'emplacement du dispositif informatique utilisateur (110) et un identifiant utilisateur associé au dispositif informatique utilisateur (110) à un dispositif informatique (130) associé au dispositif de balise (120).
